# EUROPÄISCHE PATENTSCHRIFT

(11) **EP 3 795 646 B1**
(45) Veröffentlichungstag und Bekanntmachung des Hinweises auf die Patenterteilung: **18.11.2026**
(21) Anmeldenummer: 19217867.1
(22) Anmeldetag: 19.12.2019
(51) Int. Cl.: C09C 3/00, C09C 3/10, C09D 7/45, C09D 11/03, C09D 11/322, C09D 11/326, C09D 17/00, C08K 9/04, C09D 7/62, C09D 7/63, C09D 11/037

(54) **FARB- UND FÜLLSTOFFPASTEN UNTER VERWENDUNG ANORGANISCHER PARTIKEL MIT BESCHICHTETER OBERFLÄCHE ALS SPACER**
INK AND FILLER PASTES USING INORGANIC PARTICLES HAVING A COATED SURFACE AS SPACER
PÂTE DE PEINTURE ET DE MATIÈRE DE REMPLISSAGE UTILISANT DES PARTICULES INORGANIQUES À SURFACE REVÊTUE COMME SUBSTRAT

(43) Veröffentlichungstag der Anmeldung: 24.03.2021
(73) Patentinhaber: nanoSaar Production GmbH, 66802 Ueberherrn (DE)
(72) Erfinder: STEINER, Dr. Michael, 82319 Starnberg (DE); CAVELIUS, Dr. Christian, 66386 Sankt Ingbert (DE); SCHIRRA, Hermann, 66128 Saarbrücken-Gersweiler (DE)
(74) Vertreter: Becker Kurig & Partner Patentanwälte mbB

(56) Entgegenhaltungen:
- EP-A1- 2 243 808
- WO-A1-03/066743
- WO-A2-2007/012575
- DE-A1- 102011 010 580
- US-A1- 2004 202 601
- US-A1- 2004 244 622
- STEINER MICHAEL ET AL: "NEW SPACER TECHNOLOGY FOR STABILISING PARTICLES A multi-functional nano-additive to simplify development and manufacturing. By", 1 February 2019 (2019-02-01), pages 102 - 107, XP093354676, ISSN: 0930-3847, Retrieved from the Internet <URL:https://www.nanosaar.de/user/pages/06.downloads/EU%20Coatings%20Journal_02_2019%20New%20Spacer%20Technology.pdf> DOI: https://www.nanosaar.de/user/pages/06.downloads/EU%20Coatings%20Journal_02_2019%20New%20Spacer%20Technology.pdf

## Beschreibung

### GEBIET DER ERFINDUNG

Die vorliegende Erfindung betrifft flüssige Pigment- und/oder Füllstoffzubereitungen, in denen die Pigmente und/oder Füllstoffe mittels anorganischer Partikel fein dispergiert werden und so die Agglomerationsneigung der Pigmente und/oder Füllstoffe reduziert wird. Die flüssigen Pigment- und/oder Füllstoffzubereitungen sind hervorragend zur Herstellung verschiedenster Lacke und Farben für diverse Einsatzgebiete, aber auch zum Einfärben von beispielsweise Kunststoffen geeignet.

### STAND DER TECHNIK

Pigmente und Füllstoffe werden in einer Vielzahl an Farben und Lacken für diverse Anwendungsbereiche eingesetzt.

Die Pigmentierung flüssiger Systeme, wie Lacke-, Dispersions- und Druckfarben, sowie Anstrichmitteln erfolgt aus ökologischen Gründen immer häufiger durch wässerige Zubereitungen, die neben dem Pigment, Wasser und in einigen Fällen Lösungsmittel sowie gegebenenfalls weitere stabilisierende Bestandteile enthalten. Neben den zur Dispergierung der Pigmente notwendigen organischen Dispergiermitteln müssen diesen Pigmentpräparationen in der Regel weitere komplexe Additive, wie Entschäumer, Mittel zur Erhöhung der Gefrierbeständigkeit, Rheologieadditive, sowie Antihautmittel zur Stabilisierung zugesetzt werden. Die komplexe Wechselwirkung der einzelnen Additive miteinander erschwert allerdings die Formulierung dieser Pigmentzubereitungen und führt zu ungewünschten Effekten, die unter Umständen den Einsatz weiterer Additive notwendig machen sowie die Entwicklungszeit und den Additivverbrauch erhöhen. Gleiches gilt für die Ausstattung flüssiger Systeme mit Füllstoffen.

Das Eur. Coatings Journal (M. Steiner, R. Hohmann, C. Cavelius. H. Schirra; 02-2019, Seiten 102-107) offenbart die Herstellung von Bariumsulfatnanopartikeln und deren anschließende Behandlung zur Herstellung stabilisierender Dispersionen, wobei die behandelten Bariumsulfatteilchen elektrostatisch und sterisch so verändert worden sind, dass sie stabile Dispersionen in Farbsystemen bilden und so, die Zahl der Additive erheblich senken. Weiterhin wird ein verbessertes Additiv zur Verbesserung von Farben bzw. Farbstoffdispersionen offenbart. Der Gegenstand der Erfindung unterscheidet sich von dem Dokument des Stands der Technik dadurch, dass (a) der Anteil an Komponente A 1-70 Gew.% und der Anteil der Komponente B 1-25 Gew.% beträgt.

EP 224 3808 A1 offenbart stabile Pigmentpasten im Allgemeinen. Insbesondere offenbart das Dokument eine Pigmentpaste zum Tönen eines Anstrichmittels, wobei die Pigmentpaste eine
Viskosität, gemessen bei 23°C und einer Schergeschwindigkeit von 100 s-1, von 0, 1 bis 8 Pas, sowie einen Feststoffgehalt von mindestens 60 Gew. % aufweist und
mindestens ein Pigment, mindestens ein Alkydharz mit einer Viskosität, gemessen bei 23°C und bei einer Schergeschwindigkeit von 100 s-1, von mindestens 5 Pas, mindestens ein organisches Lösungsmittel, sowie mindestens ein Netzmittel enthält.

Es besteht daher Bedarf an neuen Pigment- und/oder Füllstoffformulierungen, die eine vergleichbare Stabilität besitzen und unter Beibehaltung ihrer koloristischen Eigenschaften den beschriebenen stark additivhaltigen Präparationen vergleichbar sind, jedoch eine deutlich geringere Menge weiterer Zusätze erfordern und somit leichter zu handhaben sind.

Die Verwendung von Farbpasten zur Pigmentierung von Lacken, Dispersion- und Druckfarben bzw. die Herstellung von Füllstoffslurries erfordert die möglichst vollständige und stabile Dispergierung der Pigmente im Dispersionsmedium (üblicherweise Wasser).

Hierzu werden organische Dispergiermittel (Polyacrylatsalze, Fettsäure- und Fettalkoholderivate, Acrylat-Copolymere, MSA-Copolymere, Alkylphenolethoxylate, Guerbet-Derivate (modifizierte Fettsäureethoxylate) eingesetzt, die mit der Pigmentoberfläche wechselwirken, diese belegen und die Teilchen über elektrostatische, sterische oder elektrosterische Mechanismen stabilisieren. Zur Stabilisierung der Pigmentoberflächen ist dabei ein deutlicher Überschuss an Additiv notwendig als aufgrund der theoretischen Oberfläche der Pigmente notwendig erscheint. Üblicherweise erfolgt eine effektive Stabilisierung von Pigmentoberflächen bei Dispergiermittelkonzentrationen, die eine Schichtdicke von > 10 nm erzeugen. Vergleichbare Probleme ergeben sich bei der Bereitstellung von Füllstoffzusammensetzungen.

Der Erfindung liegt die Aufgabe zugrunde Pigment- und/oder Füllstoffpasten bereitzustellen, die einerseits gute Applikationseigenschaften, wie Stabilität, Farbstärke und gute Pigment- und/oder Füllstoffdispergierung besitzen, sich andererseits jedoch dadurch auszeichnen, dass diese keine oder eine reduzierte Menge an organischen Additiven enthalten. Durch die geringere Anzahl an Komponenten muss möglichen Inkompatibilitäten der einzelnen Komponenten weniger Rechnung getragen werden. Das vereinfacht die Herstellung entsprechender Pigment- und/oder Füllstoffpasten und macht sie universeller einsetzbar.

Die vorstehend genannten Probleme werden durch die vorliegende Erfindung gelöst.

### BESCHREIBUNG DER ERFINDUNG

Die vorliegende Erfindung betrifft gemäß einem ersten Aspekt eine flüssige oder pastöse Pigment- und/oder Füllstoffzubereitung. Die erfindungsgemäße Zubereitung umfasst als Komponente (A) 1 bis 70 Gew.-% mindestens eines Pigments und/oder mindestens eines Füllstoffs und als Komponente (B) 1 bis 25 Gew.-% mindestens einer in der Zubereitung dispergierten anorganischen, partikulären Komponente. Die Partikel der Komponente (B) sind anorganisch oder organisch oberflächenmodifiziert, wobei der hierzu verwendete Oberflächenmodifikator so ausgewählt ist, dass die oberflächenmodifizierte Komponente (B) eine kationische, anionische, amphotere oder nicht-ionische Oberfläche aufweist, und die oberflächenmodifizierte Komponente (B) ferner ein Zetapotenzial, gemessen gemäß ISO 13099-2:2012 über elektrophoretische Lichtstreuung, aufweist, das, im Fall von geladenen Partikeln der Komponente (A) der Ladung dieser Partikel entgegengesetzt ist oder, im Fall von ungeladenen Partikeln der Komponente (A), ein Zetapotenzial im Bereich von -60 bis +40 mV aufweist, um so eine Adhäsion der Partikel (B) auf der Pigment- und/oder Füllstoffoberfläche (A) zu bewirken, wobei die Partikel der dispergierten Komponente (B) eine Teilchengrößenverteilung mit einem d50-Wert, gemessen gemäß ISO 22412:2008, im Bereich von 20 bis 300 nm aufweisen.

Eine kationische Oberfläche weist eine positive elektrische Ladung auf, eine anionische Oberfläche weist eine negative Ladung auf, eine amphotere Oberfläche enthält im Sinne der vorliegenden Erfindung mindestens eine kationischen Teil und mindestens eine anionischen Teil. Eine nicht-ionische Oberfläche besitzt keine elektrische Ladung, durch die Modifizierung können auf der Oberfläche aber beispielsweise pigment- und/oder füllstoffaffine Gruppen eingefügt werden.

Die in der erfindungsgemäßen Zubereitung umfassten Pigmente und/oder Füllstoffe können eine positive oder negative elektrische Ladung aufweisen. Alternativ können die Pigmente und/oder Füllstoffe ungeladen, also elektrisch neutral, sein. Ein der elektrischen Ladung der Partikel der Komponente (A) entgegengesetztes Zetapotenzial bedeutet im Sinne der vorliegenden Erfindung, dass im Fall von Partikeln der Komponente (A) mit einer positiven elektrischen Ladung der Oberfläche, das Zetapotenzial der Partikel (B) einen negativen Wert annimmt. Dieser kann, muss aber nicht einen Betrag annehmen, welcher dem Betrag der positiven elektrischen Ladung der Oberfläche entspricht oder diesen Betrag umfasst. Im Fall von Partikeln der Komponente (A) mit einer negativen elektrischen Ladung der Oberfläche, nimmt das Zetapotenzial der Partikel (B) einen positiven Wert an. Dieser positive Wert kann, muss aber nicht einen Betrag annehmen, welcher dem Betrag der negativen elektrischen Ladung der Oberfläche entspricht oder diesen Betrag umfasst.

Es konnte gezeigt werden, dass durch die Einstellung des geeigneten Zetapotenzials (als Maß für die Oberflächenladungsdichte der anorganischen Partikel) durch eine organische Oberflächenmodifizierung Farbpigmente und Füllstoff derart stabilisiert werden können, dass bis zu 90 % der bislang verwendeten organischen Dispergier- und Benetzungsadditive eingespart werden können.

Die erfindungsgemäße Zubereitung kann optional weiterhin eine Komponente (C) mit einem Anteil von 0 bis 10 Gew.-% umfassen. Bei der Komponente (C) handelt es sich mindestens ein oberflächenaktives Netzmittel, das vorzugsweise ebenfalls dispergierende Eigenschaften aufweist. Das mindestens eine oberflächenaktive Netzmittel ist vorzugsweise dann in der erfindungsgemäßen flüssigen oder pastösen Pigment- und/oder Füllstoffzubereitung umfasst, wenn die Partikel der Komponente (A) ungeladen sind. Das Zetapotenzial der Partikel der Komponente (B) im Bereich von -60 bis +40 mV ergibt sich dann unter Einfluss des oberflächenaktiven Netzmittels.

Weiterhin umfasst die erfindungsgemäße flüssige oder pastöse Pigment- und/oder Füllstoffzubereitung als Rest Wasser und/oder mindestens ein Lösungsmittel. Der Anteil an Wasser und/oder Lösungsmittel ist so gewählt, dass die Anteile der wesentlichen und optionalen Komponenten, einschließlich des Anteils an Wasser und/oder Lösungsmittel(n) zusammen 100 Gew.-% ergeben.

Die Angabe "als Rest" ist nicht so zu verstehen, dass dadurch in der erfindungsgemäßen Zubereitung weitere, nicht explizit genannte Komponenten, beispielsweise weitere Additive und/oder Hilfsstoffe, als optionale Komponente(n) nicht mehr umfasst sein können. Das Vorliegen weiterer optionaler - auch nicht explizit genannter - Bestandteile ist erfindungsgemäß ausdrücklich mit umfasst. Für den Fall, dass derartige optionale Bestandteile ausgeschlossen werden sollen, wird hier und im Folgenden die Formulierung "bestehend aus" verwendet. Der "Rest" stellt immer den Anteil an Wasser und/oder mindestens einem Lösungsmittel dar, der nach Aufsummieren aller wesentlichen und, falls vorhanden, optionalen Bestandteilen notwendig ist, um dann 100 Gew.-% zu ergeben.

Der Begriff "Zubereitung" wird hier und im Folgenden synonym mit dem Begriff "Formulierung" oder "Zusammensetzung" verwendet.

Pigmente, im Sinne der vorliegenden Erfindung, sind Farbmittel, also farbgebende Substanzen. Im Gegensatz zu Farbstoffen bestehen sie aus Teilchen bzw. Partikeln und sie sind im Anwendungsmedium, also dem Stoff oder der Zusammensetzung, in den/die das Pigment eingearbeitet wird, praktisch unlöslich. Pigmente können beispielsweise nach ihrer chemischen Struktur, ihren optischen Eigenschaften und ihren technischen Eigenschaften, wie Korrosionsschutz und Magnetismus, unterschieden werden.

Erfindungsgemäß umfasst sind sowohl anorganische als auch organische Pigmente, wobei beide wiederum natürlichen oder synthetischen Ursprungs sein können. Neben ihrer chemischen Struktur können die Pigmente auch hinsichtlich ihrer optischen Eigenschaften untergliedert werden. Erfindungsgemäß umfasst sind insbesondere Weißpigmente, Buntpigmente, Schwarzpigmente, Effektpigmente, Glanzpigmente sowie Leuchtpigmente. Im Handel ist ein breites Spektrum an solchen Pigmenten verfügbar. Sie stehen dem Fachmann somit zur Verfügung.

Die Gruppe der anorganischen Pigmente natürlichen Ursprungs umfasst beispielsweise Erden und Mineralien, wie Erdfarben und Mineralweiß, die Gruppe der anorganischen Pigmente synthetischen Ursprungs umfasst beispielsweise Ruß, Farbruße, Weißpigmente, Eisenoxid-pigmente und Zirkonsilikate, die Syntheseprodukte unterschiedlicher, aber wohl bekannter Herstellungsverfahren darstellen. Synthetische Pigmente zeichnen sich oftmals durch eine höhere Stabilität und Reinheit aus und können somit den Pigmenten natürlichen Ursprungs überlegen und deshalb bevorzugt sein.

Im Folgenden seien Beispiele für geeignete anorganische Farbpigmente genannt:
- Weißpigmente: Titandioxid (C.I. Pigment White 6), Zinkweiß, Farbenzinkoxid; Zinksulfid, Lithopone;
- Schwarzpigmente: Eisenoxidschwarz (C.I. Pigment Black 11), Eisen-Mangan-Schwarz, Spinellschwarz (C.I. Pigment Black 27); Ruß (C.I. Pigment Black 7);
- Buntpigmente: Chromoxid, Chromoxidhydratgrün; Chromgrün (C.I. Pigment Green 48); Cobaltgrün (C.I. Pigment Green 50); Ultramaringrün; Kobaltblau (C.I. Pigment Blue 28 und 36; C.I. Pigment Blue 72); Ultramarinblau; Manganblau; Ultramarinviolett; Kobalt- und Manganviolett; Eisenoxidrot (C.1. Pigment Red 101); Cadmiumsulfoselenid (C.1. Pigment Red 108); Cersulfid (C.1. Pigment Red 265); Molybdatrot (C.1. Pigment Red 104); Ultramarinrot; Eisenoxidbraun (C.1. Pigment Brown 6 und 7), Mischbraun, Spinell- und Korundphasen (C.1. Pigment Brown 29, 31, 33, 34, 35,37,39 und 40), Chromtitangelb (C.1. Pigment Brown 24), Chromorange; Cersulfid (C.1. Pigment Orange 75); Eisenoxidgelb (C.1. Pigment Yellow 42); Nickeltitangelb (C.1. Pigment Yellow 53; C.1. Pigment Yellow 157, 158, 159, 160, 161, 162, 163, 164 und 189); Chromtitangelb; Spinellphasen (C.1. Pigment Yellow 119); Cadmiumsulfid und Cadmiumzinksulfid (C.1. Pigment Yellow 37 und 35); Chromgelb (C.1. Pigment Yellow 34); Bismutvanadat (C.1. Pigment Yellow 184).

Bei den erfindungsgemäß umfassten organischen Pigmenten handelt es sich vorzugsweise um organische Bunt- und Schwarzpigmente, die noch mehr bevorzugt in feinteiliger Form im Größenbereich von 2 bis 10.000 nm vorliegen. Die erfindungsgemäß umfassten organischen Pigmente können wiederum natürlichen oder synthetischen Ursprungs sein.

Im Folgenden seien Beispiele für geeignete organische Farbpigmente genannt:
Monoazopigmente:
   C.1. Pigment Brown 25;
   C.1. Pigment Orange 5, 13, 36, 38, 64 und 67;
   C.1. Pigment Red 1, 2, 3, 4, 5, 8, 9, 12, 17, 22, 23, 31, 48:1, 48:2, 48:3, 48:4, 49, 49:1, 51:1, 52:1, 52:2, 53, 53:1, 53:3, 57:1, 58:2, 58:4, 63, 112, 146, 148, 170, 175, 184, 185, 187, 191:1, 208, 210, 245, 247 und 251;
   C.I. Pigment Yellow 1, 3, 62, 65, 73, 74, 97, 120, 151, 154, 168, 181, 183 und 191;
   C.I. Pigment Violet 32;
Disazopigmente:
   C.I. Pigment Orange 16, 34, 44 und 72;
   C.I. Pigment Yellow 12, 13, 14, 16, 17, 81, 83, 106, 113, 126, 127, 155, 174, 176, 180 und 188;
Disazokondensationspigmente:
   C.I. Pigment Yellow 93, 95 und 128;
   C.I. Pigment Red 144, 166, 214, 220, 221, 242 und 262;
   C.I. Pigment Brown 23 und 41;
Anthanthronpigmente: C.1. Pigment Red 168;
Anthrachinonpigmente: C.1. Pigment Yellow 147, 177 und 199; C.1. Pigment Violet 31;
Anthrapyrimidinpigmente: C.I. Pigment Yellow 108;
Chinacridonpigmente: C.I. Pigment Orange 48 und 49; C.I. Pigment Red 122, 202, 206 und 209; C.I. Pigment Violet 19;
Chinophthalonpigmente: C.I. Pigment Yellow 138;
Diketopyrrolopyrrolpigmente: C.I. Pigment Orange 71, 73 und 81; C.I. Pigment Red 254, 255, 264, 270 und 272;
Dioxazinpigmente: C.I. Pigment Violet 23 und 37; C.I. Pigment Blue 80;
Flavanthronpigmente: C.I. Pigment Yellow 24;
Indanthronpigmente: C.I. Pigment Blue 60 und 64;
Isoindolinpigmente: C.I. Pigmente Orange 61 und 69; C.I. Pigment Red 260; C.I. Pigment Yellow 139 und 185;
Isoindolinonpigmente: C.I. Pigment Yellow 109, 110 und 173;
Isoviolanthronpigmente: C.I. Pigment Violet 31;
Metallkomplexpigmente: C.I. Pigment Red 257; C.I. Pigment Yellow 117, 129, 150, 153 und 177; C.I. Pigment Green 8;
Perinonpigmente: C.I. Pigment Orange 43; C.I. Pigment Red 194;
Perylenpigmente: C.I. Pigment Black 31 und 32; C.I. Pigment Red 123, 149, 178, 179, 190 und 224; C.I. Pigment Violet 29;
Phthalocyaninpigmente: C.1. Pigment Blue 15, 15:1, 15:2, 15:3, 15:4, 15:6 und 16; C.1. Pigment Green 7 und 36;
Pyranthronpigmente: C.1. Pigment Orange 51; C.1. Pigment Red 216;
Pyrazolochinazolonpigmente: C.1. Pigment Orange 67; C.1. Pigment Red 251;
Thioindigopigmente: C.1. Pigment Red 88 und 181; C.1. Pigment Violet 38;
Triarylcarboniumpigmente: C.I. Pigment Blue 1, 61 und 62; C.I. Pigment Green 1; C.I. Pigment Red 81, 81:1 und 169; C.I. Pigment Violet 1, 2, 3 und 27;
C.I. Pigment Black 1 (Anilinschwarz);
C.I. Pigment Yellow 101 (Aldazingelb);
C.I. Pigment Brown 22

Bei den Glanzpigmenten handelt es sich vorzugsweise um einphasig oder mehrphasig aufgebaute plättchenförmige Pigmente, deren Farbenspiel durch das Zusammenspiel von Interferenz-, Reflexions- und Absorptionsphänomenen geprägt ist. Als Beispiele seien Aluminiumplättchen und ein- oder mehrfach, insbesondere mit Metalloxiden beschichtete Aluminium-, Eisenoxid-und Glimmerplättchen genannt.

Das Pigment ist bzw. die Pigmente sind in der erfindungsgemäßen Pigmentzubereitung in purer Form oder als Gemisch zweier oder mehrerer Pigmente und/oder als Gemisch mit einem oder mehreren Füllstoffen enthalten. Pigmentgemische umfassen sowohl alle möglichen Mischungen der vorstehend genannten anorganischen und organischen Pigmente, unabhängig davon, ob sie natürlichen oder synthetischen Ursprungs sind, und unabhängig davon, ob welche optischen Eigenschaften die in der Mischung enthaltenen Pigmente aufweisen, als auch die Mischung von einem oder mehreren dieser Pigmente mit einem oder mehreren Füllstoffen, insbesondere den nachstehend beschriebenen Füllstoffen. Durch die Mischung mit Füllstoffen kann die Farbstärke reduziert werden, wodurch geringe Einsatzmengen besser dosiert werden können.

Füllstoffe, im Sinne der vorliegenden Erfindung, sind unlösliche Zusatzstoffe, die einem Zwischen- oder Endprodukt zugesetzt werden, um unter anderem die mechanischen, elektrischen oder Verarbeitungseigenschaften von Materialien zu verändern und/oder um den Anteil an anderen, typischerweise teureren Komponenten im Produkt zu verringern. Füllstoffe liegen im Produkt in partikulärer Form, also als Teilchenform vor.

In Farben dienen Füllstoffe vorzugsweise zur Vergrößerung des Volumens und zur Veränderung technischer und optischer Eigenschaften. Auch Pigmente können als Füllstoff dienen. Ob eine farbgebende, unlösliche Substanz als Füllstoff oder als Pigment zu betrachten ist, hängt von ihrer Anwendung ab.

Beschichtungsstoffe, wie Lacke, werden zunächst flüssig oder pulverförmig auf Gegenstände aufgetragen und härten anschließend aus. Füllstoffe werden hier eingesetzt, um die Verarbeitung, die technischen Eigenschaften, das optische Erscheinungsbild sowie mitunter auch die Haptik einer Oberfläche zu beeinflussen.

Wie auch die Pigmente können Füllstoffe anorganischer oder organischer Natur sein. Sie können in beiden Fällen natürlichen Ursprungs oder synthetischen Ursprungs sein. Erfindungsgemäß umfasst sind natürliche anorganische Füllstoffe, natürliche organische Füllstoffe, synthetische anorganische Füllstoffe und synthetische organische Füllstoffe.

Als Beispiele für üblicherweise als Füllstoffe eingesetzte anorganische Partikel seien transparentes Siliciumdioxid, Quarzmehl, Aluminiumoxid, Aluminiumhydroxid, natürliche Glimmer, natürliche und gefällte Kreide, Calciumcarbonat, Schichtsilikate, wie Magnesiumsilikathydrat, insbesondere Talkum, und Bariumsulfat genannt. In der Lackindustrie besonders bevorzugte Füllstoffe umfassen insbesondere Calciumcarbonat, Talkum, Bariumsulfat, Aluminiumhydroxid und Gemische davon. Organische Füllstoffe umfassen beispielsweise Zellulosederivate und Kohlenstofffasern.

Für den Fall, dass die erfindungsgemäße Pigment- und/oder Füllstoffzubereitung Bariumsulfat als Füllstoff enthält, handelt es sich bei diesem Bariumsulfat um BariumsulfatPartikel, die mittels eines konventionellen Mahlverfahrens erhalten wurden. Solche Bariumsulfat-Partikel weisen eine mittlere Größe im Bereich von 350 bis 650 nm auf.

Der Füllstoff ist bzw. die Füllstoffe sind in der erfindungsgemäßen Pigment- und/oder Füllstoffzubereitung in purer Form oder als Gemisch zweier oder mehrerer Füllstoffe und/oder als Gemisch mit einem oder mehreren Pigmenten enthalten. Füllstoffgemische umfassen sowohl alle möglichen Mischungen der vorstehend genannten anorganischen und organischen Füllstoffe, unabhängig davon, ob sie natürlichen oder synthetischen Ursprungs sind, und unabhängig davon, welche Funktion sie in der Zubereitung erfüllen, als auch die Mischung von einem oder mehreren dieser Füllstoffe mit einem oder mehreren Pigmenten, insbesondere der vorstehend genannten Pigmente.

Der Anteil des mindestens einen Pigments und/oder des mindestens einen Füllstoffs in der erfindungsgemäßen Zubereitung beträgt 1 bis 70 Gew.-%. Vorzugsweise beträgt der Anteil des mindestens einen Pigments und/oder des mindestens einen Füllstoffs 2 bis 60 Gew.-%, noch mehr bevorzugt 3 bis 50 Gew.-%. Die erfindungsgemäße Pigment- und/oder Füllstoffzubereitung kann also, falls gewünscht, eine hohe und standarisierte, vordispergierte Pigment- und/oder Füllstoffkonzentration bereitstellen.

Die erfindungsgemäße Zubereitung umfasst als Komponente (B) mindestens eine in der Zubereitung dispergierte, anorganische partikuläre Komponente, welche anorganisch oder organisch oberflächenmodifiziert ist. Die Komponente (B) weist also einen anorganischen Kern und eine sich darauf befindliche organische oder anorganische Schicht auf der Oberfläche des Kerns auf.

Die partikuläre Komponente ist im Dispergiermedium nicht oder nur schwer löslich und liegt deshalb in dispergierter Form vor. Das Dispergiermedium meint die Pigment- und/oder Füllstoffzubereitung mit allen wesentlichen und optionalen Bestandteilen, außer der Komponente (B).

Durch die Oberflächenmodifikation kann die Interaktion der Partikel der Komponente (B) mit ihrer Umgebung, und insbesondere mit den Pigment- und/oder Füllstoffpartikeln (Komponente (A)), beeinflusst werden. Die Grenzfläche kann entscheidend zur Leistung, also der partikelstabilisierenden Eigenschaft und/oder der dispergierunterstützenden Eigenschaft der anorganischen Partikel (Komponente (B)) beitragen. Ebenso kann eine Oberflächenmodifikation die benetzenden Eigenschaften verbessern. Durch die Modifizierung kann die Oberfläche also auf insbesondere diese Eigenschaften hin ausgerüstet und maßgeschneidert werden. So können die Oberflächeneigenschaften der Partikel der Komponente (B) so abgestimmt werden, dass diese auf den zu dispergierenden Pigmenten und/oder Füllstoffen (Komponente (A)) haften. Die meisten im Handel befindlichen Pigmente, wie zum Beispiel Farbruße, besitzen eine negativ geladene Oberfläche und somit eine negatives Zetapotenzial in wässeriger Umgebung. Erfindungsgemäß werden bei Pigmenten und/oder Füllstoffen mit einer negativ geladenen Oberfläche als Komponente (B) Partikel mit einem Zetapotenzial > 0 mV eingesetzt, um während des Dispergierungsprozesses eine Belegung der Pigmentoberfläche durch elektrostatische Wechselwirkung zu erreichen. Weisen die Pigmente und/oder Füllstoffe eine positiv geladene Oberfläche auf, werden erfindungsgemäß als Komponente (B) Partikel mit einem Zetapotenzial < 0 mV eingesetzt, um wiederum während des Dispergierungsprozesses eine Belegung der Pigmentoberfläche durch elektrostatische Wechselwirkung zu erreichen. Weisen die Pigmente und/oder Füllstoffe keine geladene Oberfläche auf, werden erfindungsgemäß als Komponente (B) Partikel mit einem Zetapotenzial im Bereich von -60 bis +40 mV eingesetzt. Erfindungsgemäß eingesetzte Partikel (B) können darüber hinaus pigment- oder füllstoffaffine und/oder sterisch anspruchsvolle Gruppen tragen, die nach Anbindung der Partikel (B) auf der Pigment- oder Füllstoffoberfläche eine zusätzliche Stabilisierung der Pigmentzubereitung bewirken. Pigment- oder füllstoffaffine Gruppen des Oberflächenmodifikators können ein Anziehen und Anhaften der Partikel der Komponente (B) an die Oberfläche der Komponente (A) bewirken oder das durch das sich entstellende Zetapotenzial bewirkte Anziehen und Anhaften der Partikel der Komponente (B) an die Oberfläche der Komponente (A) verstärken. Sterisch anspruchsvolle Gruppen können zu einer sterischen Abstoßung führen. Durch beide Effekte im Einzelnen, aber insbesondere im Zusammenspiel der beiden entgegenwirkenden Effekte kann ein stark dispergierender Effekt erhalten werden.

Das Zetapotenzial meint im Sinn der vorliegenden Erfindung das elektrische Potential an der Abscherschicht der bewegten Partikel der dispergierten anorganischen und oberflächenmodifizierten Komponente (B) in einem Dispersionsmedium. Befinden sich geladene Partikel in Suspension, wird deren Potential durch Anlagerung von Ionen im Suspensionsmedium kompensiert. Auf der Partikeloberfläche lagern sich fest gebundene Ionen in der sogenannten Helmholtz-Schicht an. Weitere Ionen lagern sich eher locker gebunden in einer diffusen, d. h. ungeordneten, Schicht an. Damit erscheint das Partikel aus großer Entfernung elektrisch neutral, weil alle Partikelladungen durch Ionen des Suspensionsmediums kompensiert werden. Bewegt sich ein Partikel, wird durch Reibung ein Teil der locker gebundenen diffusen Schicht abgeschert und das Partikel erscheint nicht mehr elektrisch neutral, sondern besitzt wieder ein Potential. Dieses Potential an der Abschergrenze ist das Zetapotenzial (Oberflächenpotenzial).

Das Zetapotenzial wird im Rahmen in dieser Erfindung gemäß ISO 13099-2:2012 über elektrophoretische Lichtstreuung gemessen.

Eine erfindungsgemäß bevorzugte anorganische partikuläre Kern der Komponente (B) ist ausgewählt aus der Gruppe, bestehend aus anorganischen Oxiden, Hydroxiden, Sulfaten, Phosphaten, Silicaten, pyrogenes oder präzipitiertes Silica, und beliebigen Mischungen davon.

Noch weiter bevorzugt ist der anorganische partikuläre Kern der Komponente (B) ausgewählt aus der Gruppe, bestehend aus Bariumsulfat (BaSO₄), Calciumcarbonat (CaCO₃), Titandioxid (TiO₂), Siliziumdioxid (SiO₂) und beliebigen Mischungen davon. Erfindungsgemäß höchst bevorzugt umfasst der Kern der Partikel der Komponente (B) Bariumsulfat oder er besteht aus Bariumsulfat.

Die vorstehend beschriebene anorganische partikuläre Komponente (B) ist gemäß einer erfindungsgemäßen Ausführungsform durch eines der nachstehend im Detail beschriebenen Herstellungsverfahren für diese Komponente (B) erhältlich oder kann so erhalten werden.

Der Anteil der mindestens einen, in der Zubereitung dispergierten, anorganischen partikulären Komponente (B) in der erfindungsgemäßen Zubereitung beträgt 1 bis 25 Gew.-%. Vorzugsweise beträgt der Anteil der mindestens einen, in der Zubereitung dispergierten, anorganischen partikulären Komponente (B) 1,2 bis 22 Gew.-%, noch mehr bevorzugt 1,4 bis 20 Gew.-%. In einer erfindungsgemäßen Ausführungsform beträgt die Obergrenze des Anteils der anorganischen partikulären Komponente in der erfindungsgemäßen Zubereitung 20 Gew.-%.

Die erfindungsgemäße Pigment- und/oder Füllstoffzubereitung liegt in flüssiger oder pastöser Form vor. Der flüssige oder pastöse Zustand ist selbstredend nicht allein stoffspezifisch, sondern hängt auch von äußeren Faktoren wie der Temperatur und dem Druck ab. Im Sinne der vorliegenden Erfindung bedeutet ein flüssiger oder pastöser Zustand, dass die Zubereitung bei Normaldruck (1013,25 hPa) und zumindest in einem Temperaturbereich von 1 bis 70 °C, vorzugsweise in einem Temperaturbereich von 5 bis 60 °C flüssig oder pastös ist. Eine pastöse Zubereitung unterscheidet sich von einer flüssigen Zubereitung dadurch, dass Pasten Suspensionen mit einem höheren Füllgrad an Festkörper, insbesondere Pigment und/oder Füllstoff, sind.

Je nach Einsatzgebiet der erfindungsgemäßen Zubereitung werden die wesentlichen Komponenten (A) und (B) in Wasser und/oder einem oder mehreren Lösungsmitteln vordispergiert. In dieser Dispersion sind ebenfalls etwaige optionale Komponenten enthalten.

Mögliche Lösungsmittel umfassen, je nach Einsatzgebiet, organische Lösungsmittel, wie beispielsweise Alkohole, Ester, Ketone, aliphatische und aromatische Lösungsmittel, UVhärtbare Monomere und deren Mischungen, sowie beliebige Mischungen unterschiedlicher Lösungsmittel, insbesondere beliebige Mischungen der vorstehend genannten Lösungsmittel, beispielsweise Mischungen von einem oder mehreren aromatischen Lösungsmitteln und einen oder mehreren Estern. Die Lösungsmittel, vorzugsweise die organischen Lösungsmittel, sind vorzugsweise solche, die mit Wasser mischbar sind. Beispiele für mit Wasser mischbare Lösungsmittel umfassen C₃-C₄-Ketone wie Aceton und Methylethylketon, cyclische Ether wie Dioxan und Tetrahydrofuran, C₁-C₄-Alkanole wie Methanol, Ethanol, n-Propanol, Isopropanol, n-Butanol, tert.-Butanol, Polyole und deren Mono-und Dimethylether wie Glykol, Propandiol, Ethylenglykolmonomethylether, Diethylenglykol, Diethylenglykolmonomethylether, Diethylenglykoldimethylether, Glycerin, weiterhin C₂-C₃-Nitrile wie Acetonitril und Propionitril, Dimethylsulfoxid, Dimethylformamid, Formamid, Acetamid, Dimethylacetamid, Butyrolacton, 2-Pyrrolidon und N-Methylpyrrolidon.

Neben den vorstehend genannten wesentlichen Komponenten und dem optionalen Netzmittel (Komponente (C)) kann die erfindungsgemäße Pigment- und/oder Füllstoffzubereitung weitere Additive und/oder Hilfsstoffe als optionale Komponente(n) umfassen. Die Additive und/oder Hilfsstoffe können auch deshalb zugesetzt werden, um die erfindungsgemäße Pigment- und/oder Füllstoffzubereitung wie das spätere Endprodukt, beispielsweise den Lack oder die Farbe, selbst zu formulieren, um so eine Kompatibilität herzustellen.

So kann die erfindungsgemäße Pigment- und/oder Füllstoffzubereitung gemäß einer Ausführungsform weiterhin mindestens ein Bindemittel und/oder mindestens ein Anreibeharz enthalten. Der Anteil an Bindemittel oder Bindemittelgemisch in der Zusammensetzung beträgt, sofern vorhanden, vorzugsweise 0,1 bis 40 Gew.-%, noch mehr bevorzugt 0,2 bis 25 Gew.-%. Für die Formulierung von Pigment- und/oder Füllstoffzubereitungen geeignete Bindemittel sind dem Fachmann bekannt. Das Bindemittel ist beispielsweise ausgewählt aus der Gruppe, bestehend aus Alkydharzen, Epoxidharzen, Silikonharzen, Polyacrylaten, insbesondere Acrylatcopolymere, und einer beliebigen Mischung davon. Insbesondere kann eine Acrylatcopolymerdispersion (beispielsweise NeoCryl^{®} BT-24 EU) als Bindemittel eingesetzt werden.

Gemäß einer weiteren Ausführungsform ist die erfindungsgemäße Pigment- und/oder Füllstoffzubereitung frei von Bindemittel. Der Anteil an Bindemittel beträgt also 0 Gew.-% (abgesehen von etwaigen nicht vermeidbaren Verunreinigungen).

Der Anteil des mindestens einen Anreibeharzes beträgt vorzugsweise 0,1 bis 10 Gew.-%, noch mehr bevorzugt 0,2 bis 8 Gew.-%.

Weitere Additive oder Hilfsstoffe können sein anionische, kationische, nichtionische oder amphotere Tenside, beispielsweise Surfynol^{®} 104 E, und Dispergierhilfen, wie beispielsweise Copolymere mit funktionellen Gruppen, die eine hohe Pigmentaffinität aufweisen, beispiels-weise Dispergierhilfen aus der Zetasperse^{®}-Produktfamilie, und/oder beispielsweise Dimethylaminoethanol und/oder Polyelektrolyte sein. Ebenso kann die Gruppe der Additive und Hilfsstoffe biozide Substanzen, wie beispielsweise Ebotec MT15SF, umfassen.

Es kann aber ebenso erfindungsgemäß bevorzugt sein, dass die Pigment- und/oder Füllstoffzubereitung frei von weiteren Additiven und/oder Hilfsstoffen, außer dem optionalen Netzmittel (Komponente (C)) ist. Je geringer der Zusatz und/oder der Anteil an solchen Additiven und/oder Hilfsmitteln ist, desto höher ist die Kompatibilität mit diversen Endprodukten, also beispielsweise verschiedene Lack- und Farbsysteme.

In den vorstehend beschriebenen Pigment- und/oder Füllstoffzubereitungen fungieren die dispergierten Partikel der anorganischen und oberflächenmodifizierten Komponente (B) als Spacer / physikalische Abstandhalter zwischen den Pigment- oder Füllstoffpartikeln. Sie reduzieren somit die Agglomerationsneigung der Pigmente und/oder Füllstoffe. Sie fördern damit eine feine Verteilung der Pigmente und/oder Füllstoffe im Dispersionsmedium. Damit können wiederum hinsichtlich ihrer Konzentration an Pigment und/oder Füllstoff standardisierte Zubereitungen bereitgestellt werden, die dann vorteilhaft zum standardisierten Einfärben und/oder Modifizieren von den gewünschten Endprodukten, wie beispielsweise Lacke, Farben, Kunststoffe, eingesetzt werden können.

Erfindungsgemäß weisen die Partikel der dispergierten anorganischen und oberflächenmodifizierten Komponente (B) eine Teilchengrößenverteilung mit einem d50-Wert im Bereich von von 20 bis 300 nm, und bevorzugt im Bereich von 25 bis 200 nm auf. Geeignete Methoden zur Bestimmung der Teilchengrößenverteilung sind dem Fachmann bekannt. Im Rahmen dieser Erfindung erfolgt die Bestimmung über dynamische Lichtstreuung nach ISO 22412:2008. Bestimmt wird der hydrodynamische d50-Wert.

Eine durchschnittliche Größe d50 im Bereich von 10 bis 500 nm hat sich überraschenderweise als besonders vorteilhaft erwiesen, weil solche Partikel eine besonders vorteilshafte Abstandshalterfunktion erfüllen und eine Agglomeration oder gar Aggregation der Pigment- oder Füllstoffpartikel verhindern oder zumindest reduzieren. Diese kleinen Partikel können bei gleichem Materialeinsatz eine effektive Stabilisierung besonders feinteiliger Pigmente bewirken.

Die Partikel der anorganischen und oberflächenmodifizierten Komponente (B) sind gemäß einer bevorzugten Ausführungsform der vorliegenden Erfindung in der erfindungsgemäßen Pigment- und/oder Füllstoffzubereitung elektrostatisch, sterisch oder elektrosterisch, bevorzugt sterisch oder elektrosterisch, besonders bevorzugt elektrosterisch stabilisiert.

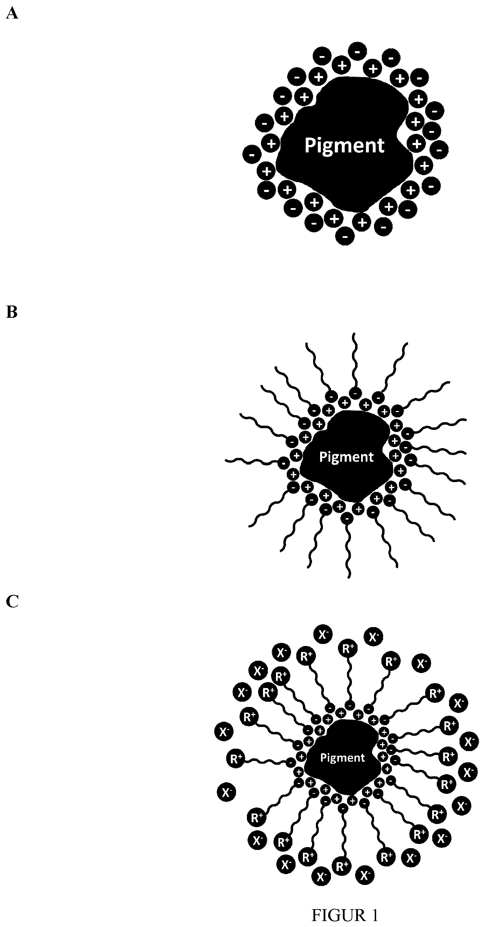

Einer elektrostatischen Stabilisierung (siehe Figur 1) liegt das Prinzip zugrunde, dass sich bei Annäherung von zwei Teilchen sich die Doppelschichten der Teilchen beeinflussen. Bei gegensätzlicher Ladung ziehen sie sich an, bei gleichnamiger Ladung stoßen sie sich ab. Das Zusammenspiel zwischen diesen elektrostatischen Kräften und den anziehenden London-van der Waals-Kräften wird durch die DLVO-Theorie beschrieben. Durch geeignete Additive kann die Oberflächenladung der Pigment- oder Füllstoffpartikel stark beeinflusst werden. So wird beispielsweise durch gezielte Erzeugung starker Ladungen ein hohes Abstoßungspotential der Pigment- oder Füllstoffpartikel erzielt und damit die Flockulation zurückgedrängt. Als Dispergieradditive, die auf diese Weise wirken, sind insbesondere Polyelektrolyte geeignet, die aufgrund ihrer Polymerstruktur leicht und dauerhaft auf der Pigmentoberfläche adsorbieren und durch ihre Vielzahl von ionischen Gruppen eine starke Oberflächenladungen bewirken. Diese Art der Stabilisierung ist für wässerige Systeme besonders geeignet, da sich nur hier (wegen der hohen Dielektrizitätskonstante des Wassers) ausreichend starke Ladungen ausbilden. Sie ist aber nicht darauf beschränkt. Neben der Dielektrizitätskonstante haben auch die Ionenkonzentration und vor allem die Wertigkeit der Ionen einen starken Einfluss auf die elektrische Doppelschicht. Hohe Ionenkonzentration und mehrwertige Ionen (bereits in geringer Konzentration) können die Stabilisierung erheblich verschlechtern und sogar ganz zusammenbrechen lassen. Weisen die Partikel der Komponente (A) und der Komponente (B) eine unterschiedliche Ladung oder ein unterschiedliches Zetapotenzial auf, kann die Komponente (B) an die Oberfläche der Komponente (A) binden. Mit der Komponente (B) beladene Pigmente oder Füllstoffe stoßen sich elektrostatisch ab.

Eine sterische Stabilisierung bedeutet, dass statt mit elektrischen Ladungen durch auf der Oberfläche adsorbierte Substanzen, insbesondere von Polymerschichten, ein Abstoßungspotential zwischen dispergierten Partikeln aufbauen lässt. Jedes Teilchen ist beispielsweise von einer Hülle aus solvatisierten Polymermolekülen umgeben und bei Annäherung zweier Teilchen überlappen und durchdringen sich diese Polymerhüllen. Dadurch erhöht sich im Überlappungsbereich die Polymerkonzentration und durch den osmotischen Druck wird Lösemittel in diesen Bereich transportiert, das die Teilchen auf diese Weise wieder auseinander drängt. Außerdem werden im Überlappungsbereich die Polymermoleküle in ihrer Konformation eingeschränkt, was eine Reduzierung der Entropie bedeutet und sich deswegen ebenfalls als Abstoßungspotential darstellt. Je nach System ist neben dem entropischen auch noch ein enthalpischer Beitrag zur Stabilisierung möglich.

Die elektrosterische Stabilisierung kombiniert beide Mechanismen. Dabei sind die elektrischen Ladungen, die für die Abstoßung verantwortlich sind, am Ende der ins Dispergiermedium hineinragenden Ketten lokalisiert.

Der Oberflächenmodifikator der Komponente (B) ist vorzugsweise mindestens eine organische Verbindung. Noch mehr bevorzugt ist die organische Verbindung ausgewählt aus der Gruppe, bestehend aus anionischen, kationischen, nicht-ionischen, amphotheren oder multifunktionellen Molekülen, oder Polymeren, Copolymeren, Block-Copolymeren, und beliebigen Mischungen davon. Die organischen Verbindungen zeichnen sich vorzugsweise durch eine hohe Affinität zur Partikeloberfläche aus und können vorzugsweise gleichzeitig sterisch oder elektrosterisch stabilisierend auf Pigmente oder Füllstoffe wirken. In einer besonders bevorzugten Ausführung der vorliegenden Erfindung weist der Oberflächenmodifikator der Komponente (B) und insbesondere die eine oder die mehreren der vorstehend erwähnten organischen Verbindungen eine oder mehrere pigment- und/oder füllstoffaffine Gruppen auf. Ein bevorzugtes oberflächenmodifizierendes Polymer ist ausgewählt aus der Gruppe, bestehend aus einem Polycarboxylatether, einem Polyacrylat, einem Polymethacrylat, einem Polyvinyl, einem Copolymer, insbesondere einem Block-Copolymer umfassend einen Polycarboxylatether, ein Polyacrylat, und/oder ein Polymethacrylat, ein Polyvinyl, und beliebige Mischungen davon. Die Block-Copolymere weisen wenigsten einen Polymerblock von einem Polymertyp, vorzugsweise ausgewählt aus der Gruppe bestehend aus einem Polycarboxylatether, einem Polyacrylat, einem Polymethacrylat, und einem Polyvinyl, und wenigstens einen Polymerblock von einem anderen Polymertyp auf. Das Block-Copolymer kann amphiphil sein und dabei wenigstens einen hydrophilen Polymerblock und wenigstens einen hydrophoben Polymerblock aufweisen. Die Herstellung von Block-Copolymeren ist dem Fachmann geläufig.

Diese bevorzugten oberflächenmodifizierenden Polymere können mit einer oder mehreren pigment- und/oder füllstoffaffine Gruppen ausgestattet sein. In einer erfindungsgemäßen Ausführungsform ist das oberflächenmodifizierende Polymer ein Polycarboxylatether, insbesondere ein Polycarboxylatether mit pigment- oder füllstoff affinen Gruppen.

Als Oberflächenmodifikator geeignete Moleküle, Polymere, Copolymere oder Block-Copoylmere sind dem Fachmann bekannt und stehen im Handel beispielsweise als sogenannte Netz- und Dispergieradditive zur Verfügung. Zur Oberflächenbeschichtung des Kerns der Komponente (B) sind beispielsweise die folgenden kommerziell verfügbaren Netz- und Dispergieradditive geeignet Byk LP N 22669, Carbowet GA 211, Carbowet GA 221, Efka WE 3110, Efka FA 4671, Edaplan 490, Edaplan 494, Edaplan 516, Disperbyk 180, Disperbyk 182, Disperbyk 184, Disperbyk 191, Disperbyk 192, Disperbyk 2010, Disperbyk 2060, Dispersogen PCE, Dispex CX 4320, Dispex Ultra PX 4275, Dispex Ultra FA 4420, Dispex Ultra FA 4480, Dispex Ultra PX 4425, Dispex Ultra PX 4575, Metolat 514, Tego Dispers 757W, Tego Dispers 755W, Tego Dispers 760W, Zetasperse 3600, Zetasperse 3700 und beliebige Kombinationen davon.

Als Oberflächenmodifikator sehr geeignet sind insbesondere Kammpolymere. Kammpolymere sind eine spezielle Form von verzweigten Polymeren, die aufgrund ihrer spezifischen Struktur interessante Anwendungsgebiete eröffnen. Kammpolymere verknüpfen unterschiedliche Polymersegmente mit verschiedenen Eigenschaften in einem Makromolekül. Dadurch können sehr komplexe Wirkungsmechanismen realisiert werden.

Unter einem Kammpolymer wird im Rahmen der vorliegenden Erfindung ein Polymer mit einer, vorzugsweise linearen, Hauptkette bzw. mit einem, vorzugsweise linearen, Rückgrat verstanden, welches in mehr oder weniger regelmäßigen Abständen eine oder mehrere verschiedene Arten von Seitenketten aufweist. Die Seitenketten können längere, untereinander nahezu gleich lange Seitenketten sein, die beispielsweise aliphatischer Natur sind. Kammpolymere können aus linearen Ketten aufgebaut werden, die funktionelle Gruppen enthalten, an denen Seitenketten aufgepfropft oder durch polymeranaloge Reaktionen eingeführt werden. Eine andere Möglichkeit der Synthese von Kammpolymeren besteht in der Kopplung von Makromonomeren. Kammpolymere als solche und Verfahren zu deren Synthese sind dem Fachmann bekannt. Gemäß einer bevorzugten Ausführungsform der vorliegenden Erfindung umfasst die erfindungsgemäße Pigment- und/oder Füllstoffzubereitung als Komponente (B) einen anorganischen Kern, welcher vorzugsweise Bariumsulfat umfasst oder aus diesem besteht, und der mit einem Kammpolymer oberflächenmodifiziert ist.

Gemäß einer weiteren bevorzugten Ausführungsform weist das zur Oberflächenmodifikation eingesetzte Kammpolymer als Hauptkette ein Polyacrylat-Polymer oder -Blockcopolymer auf oder die Hauptkette besteht aus einem Polyacrylat-Polymer oder -Blockcopolymer. Alternativ weist die Hauptkette ein Polymethacrylat-Polymer oder -Blockcopolymer auf oder die Hauptkette besteht aus einem Polymethacrylat-Polymer oder -Blockcopolymer. Noch weiter alternativ weist die Hauptkette ein Polycarboxylat, einen Polycarboxylatether oder ein entsprechendes -Blockcopolymer auf oder die Hauptkette besteht aus einem Polycarboxylat, einen Polycarboxylatether oder einem entsprechenden -Blockcopolymer. Durch deren Verwendung lassen sich sowohl der sterische Anspruch als auch die Oberflächenladungsdichte auf das Pigment oder den Füllstoff besonders vorteilhaft anpassen.

Die Seitenketten dieser bevorzugten Kammpolymere sind vorzugsweise Polyethylenglycol-Ketten oder umfassen solche. Polyethylenglycol wird nachfolgend auch als "PEG" abgekürzt. PEG ist ein wasserlösliches Polymer mit der allgemeinen Summenformel C₂ₙH₄ₙ₊₂Oₙ₊₁. Die Wiederholeinheit des linear aufgebauten Polymers ist (-CH₂-CH₂-O-). Die Kettenlänge und die daraus resultierende molare Masse beeinflussen die Eigenschaften des PEG. Erfindungsgemäß als Seitenketten der Kammpolymere besonders bevorzugte Polyethylenglycole weisen ein zahlenmittleres Molekulargewicht Mn im Bereich von 500 bis 10.000 g/mol, noch mehr bevorzugt im Bereich von 600 bis 8.000 g/mol, höchst bevorzugt im Bereich von 700 bis 6.000 g/mol auf.

Erfindungsgemäß bevorzugt sind Kammpolymere, insbesondere Kammpolymere die als Hauptkette ein Polyacrylat-Polymer oder -Blockcopolymer, ein Polymethacrylat-Polymer oder -Blockcopolymer, ein Polycarboxylat, und/oder einen Polycarboxylatether oder ein Polycarboxylat- oder Polycarboxylatether-Blockcopolymer aufweisen oder die Hauptkette daraus besteht, die ein zahlenmittleres Molekulargewicht Mn im Bereich von 15.000 g/mol bis 2.000.000 g/mol, noch mehr bevorzugt im Bereich von 40.000 g/mol bis 1.000.000 g/mol, aufweisen. Das Verhältnis von Mw/Mn liegt vorzugsweise im Bereich von 1,1:1 bis 10:1, noch mehr bevorzugt im Bereich von 1,2:1 bis 5:1. Die Seitenketten dieser bevorzugten Kammpolymere sind vorzugsweise Polyethylenglycol-Ketten oder umfassen solche, insbesondere solche mit einem zahlenmittleren Molekulargewicht Mn im Bereich von 500 bis 10.000 g/mol, noch mehr bevorzugt im Bereich von 600 bis 8.000 g/mol, höchst bevorzugt im Bereich von 700 bis 6.000 g/mol.

Die Molmassen Mn der Kammpolymere können beispielsweise durch Gelpermeationschromatographie mit geeigneten Eichsätzen als Kalibrationsmaterial bestimmt werden.

Aus der Kombination der vorstehend beschriebenen Oberflächenmodifikatoren mit dem partikulären, anorganischen Kern der Komponente (B) ergeben sich oberflächenbeschichtete Partikel, die besonders vorteilhaft als Netz- und Dispergieradditiv für Pigment- und/oder Füllstoffzubereitungen eingesetzt werden können. Sie übertreffen in ihrer stabilisierenden Wirkung die Einzelkomponenten, also den Oberflächenmodifikator als solchen und die anorganischen Partikel als solche. Sie wirken synergistisch zusammen, so dass beispielsweise deutlich geringere Mengen an der Komponente (B) eingesetzt werden müssen, um die gleiche Wirkung zu erzielen.

Gemäß einer weiteren Ausführungsform besitzt der Oberflächenmodifikator neben der partikelstabilisierenden Eigenschaft gleichermaßen dispergierunterstützende und benetzende Eigenschaften.

Gemäß einer weiteren bevorzugten Ausführungsform der erfindungsgemäßen Pigment- und/oder Füllstoffzubereitung beträgt der Massenanteil des Oberflächenmodifikators, insbesondere der vorstehend beschriebenen bevorzugten und besonders bevorzugten Oberflächenmodifikatoren, beispielsweise der Kammpolymere, bezogen auf den anorganischen Kern der Partikel der Komponente (B) 0,1 bis 50 %, vorzugsweise 0,2 bis 10 %. Diese Bereichsangaben treffen beispielsweise auch auf solche erfindungsgemäße Ausführungsformen zu, bei denen der anorganische Kern der Partikel der Komponente (B) Bariumsulfat umfasst oder der Kern aus Bariumsulfat besteht.

In einer besonders bevorzugten Ausführungsform liegt das Zetapotenzial der Komponente (B), insbesondere das Zetapotenzial einer der vorstehend beschriebenen bevorzugten oder besonders bevorzugten Komponente (B) im Bereich von -70 mV bis -2 mV, noch mehr bevorzugt im Bereich von -60 mV bis -3 mV. Dies gilt mit der Maßgabe, dass die Komponente (A) eine positive Oberflächenladung aufweist.

Für den Fall, dass die Komponente (A) eine negative Oberflächenladung aufweist, ist es erfindungsgemäß besonders bevorzugt, dass das Zetapotenzial der Komponente (B), insbesondere das Zetapotenzial einer der vorstehend beschriebenen bevorzugten oder besonders bevorzugten Komponente (B) im Bereich von +0,5 mV bis +40 mV, noch mehr bevorzugt im Bereich von +1 mV bis +35 mV liegt.

Durch diese bevorzugten Werte für die Zetapotenziale kann eine besonders effektive Stabilisierung der jeweiligen Komponente (A) bei gleichzeitig geringerem Materialeinsatz erzielt werden.

Wie bereits vorstehend erläutert, können die Partikel der Komponente (A) unpolar sein. In solch einem Fall ist es erfindungsgemäß bevorzugt, dass die Pigment- und/oder Füllstoffzubereitung mindestens ein Netzmittel umfasst. Das Netzmittel oder das Netzmittelgemisch kann aber auch dann eingesetzt, wenn die dispergierten Partikel der Komponente (B), , und das oder die Pigment(e) und/oder der oder die Füllstoff(e) die gleiche Ladung besitzen, und/oder wenn der Pigment- und/oder Füllstoffkörper (Komponente (A)) eine zum Zetapotenzial der Komponente (B) entgegengesetzte Oberflächenladung aufweist. Das oder die zusätzlichen Netzmittel (Komponente (C)) erleichtern einen Kontakt der Partikel (B) mit der Pigment- oder Füllstoffoberfläche und stellen eine ausreichende Entlüftung des Pigment- oder Füllstoffpulvers sicher.

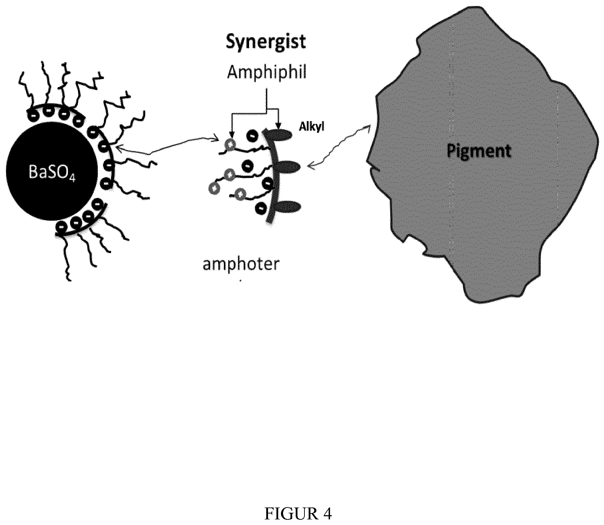

Als Netzmittel kommen sowohl stark oberflächenaktive niedermolekulare Verbindungen als auch komplex Polymere mit dispergierenden Eigenschaften in Frage. Besonders bevorzugte Netzmittel sind AB-, BAB-Blockcopolymere, sowie Kammpolymere wie beispielsweise Dispersogen PCE (Clariant), die Komponenten mit pigmentaffinen Gruppen, sowie einen hydrophilen Teil, der nichtionisch, kationisch, anionisch oder amphiphil sein kann, besitzen. Es ist erfindungsgemäß bevorzugt, dass das wenigstens eine Netzmittel entweder ein amphiphiles molekulares oder polymeres Netzmittel, eine anionisches molekulares oder polymeres Netzmittel, ein kationisches molekulares oder polymeres Netzmittel oder eine beliebige Mischung von einem oder mehreren dieser Netzmittel ist. Noch weiter bevorzugt weisen die amphiphilen, kationischen oder anionischen Netzmittel pigmentbenetzende Eigenschaften auf. Sie können beispielsweise und vorzugsweise pigment- und/oder füllstoffaffine Gruppen aufweisen, bei denen es sich vorzugsweise um Alkylgruppen handelt, insbesondere um solche, bei denen 1 bis 10 Kohlenstoffatome miteinander verbunden sind (siehe auch Figur 4).

Vorzugsweise liegt das Zetapotenzial der resultierenden Komponente (B) plus Netzmittel im Bereich von -60 mV bis +40 mV.

Wenn vorhanden, beträgt der Anteil an Netzmittel oder Netzmittelgemisch an der erfindungsgemäßen Pigment- und/oder Füllstoffzubereitung vorzugsweise 0,1 bis 10 Gew.%, noch mehr bevorzugt 0,2 bis 8 Gew.-%, weiter bevorzugt 0,3 bis 6 Gew.-%.

Es ist aber ebenso erfindungsgemäß vorgesehen, dass die Pigment- und/oder Füllstoffzubereitung, abgesehen von möglichen Verunreinigungen, kein Netzmittel enthält. Gemäß einer Ausführungsform beträgt der Anteil an Netzmittel also 0 Gew.-%.

Die partikuläre Komponente (B) kann durch kontrollierte Fällung, Co-Fällung und/oder Selbstorganisationsprozesse in einem Mikrojetreaktor, hierin auch als "MJR" bezeichnet, hergestellt werden. Vorzugsweise kommt ein Mikrojetreaktor entsprechend der EP 1 165 224 B1 zum Einsatz. Ein solcher Mikrojetreaktor weist mindestens zwei sich gegenüberliegende Düsen mit jeweils zugeordneter Pumpe und Zuführleitung zum Spritzen jeweils eines flüssigen Mediums in einen von einem Reaktorgehäuse umschlossenen Reaktorraum auf einen gemeinsamen Kollisionspunkt auf, wobei weiterhin optional eine Öffnung in dem Reaktorgehäuse vorgesehen ist, durch die ein Gas, eine verdampfende Flüssigkeit, eine kühlende Flüssigkeit oder ein kühlendes Gas zur Aufrechterhaltung der Gasatmosphäre im Reaktorinneren, insbesondere im Kollisionspunkt der Flüssigkeitsstrahlen, bzw. zur Kühlung der entstehenden Produkte einleitbar ist. Der Reaktor enthält eine weitere Öffnung zum Entfernen der entstehenden Produkte aus dem Reaktorgehäuse. Es kann also über eine Öffnung in den Reaktorraum ein Gas, eine verdampfende Flüssigkeit oder ein kühlendes Gas zur Aufrechterhaltung einer Gasatmosphäre im Reaktorinneren, insbesondere im Kollisionspunkt der Flüssigkeitsstrahlen, bzw. zur Kühlung der entstehenden Produkte eingeleitet und die entstehenden Produkte und überschüssiges Gas durch eine Öffnung aus dem Reaktorgehäuse durch Überdruck auf der Gaseintrittsseite oder durch Unterdruck auf der Produkt- und Gasaustrittsseite entfernt werden. Mit einem solchen Reaktor gelingt es, besonders kleine Partikel zu generieren, insbesondere können so Partikel mit den als bevorzugt beschriebenen Größen hergestellt werden.

Zur Herstellung der partikulären Komponente (B) wird ein aus der ersten Düse austretender Strahl eines ersten Edukts oder eines ersten Edukt-Gemisches und ein aus einer zweiten Düse austretender Strahl eines zweiten Edukts oder eines zweiten Edukt-Gemisches mit definierten Drücken und Flussraten im Reaktorraum des Mikrojetreaktors an einem Kollisionspunkt aufeinander geleitet. Durch den optionalen Gaseintritt kann der Mikrojetreaktors der Reaktorraum begast werden, und das im Kollisionspunkt erhaltene Produkt wird über den Produktaustritt ausgetragen.

Das Produkt kann in Form einer Dispersion erhalten werden. Solche Dispersionen können mittels einer Solvent/Nonsolvent-Fällung, wie beispielsweise in der EP 2 550 092 A1 beschrieben, erhalten werden. Unter einer Solvent/Nonsolvent-Fällung versteht man in diesem Zusammenhang, dass ein Stoff oder Stoffgemisch in einem Solvent gelöst und als Flüssigkeitsstrahl mit einem zweiten Flüssigkeitsstrahl, welcher ein weiteres Edukt und Edukt-Gemisch enthalten kann, kollidiert, wobei der gelöste Stoff oder das daraus erhaltene Produkt wieder gefällt wird. Solche Dispersionen, beispielsweise nanoskalige Bariumsulfatdispersionen, können auch durch eine chemische Fällung wie beispielsweise in der DE 10 2017 110 292 A1 beschrieben, hergestellt werden.

Das Produkt kann aber auch in Form eines getrockneten Pulvers erhalten werden. Hier werden die Edukte im Mikrojetreaktor sehr schnell vermischt, wobei die Edukte im Kollisionspunkt zum gewünschten Produkt reagieren, das in Form von Nanopartikeln ausfällt. Die so entstehende Nanopartikel-Suspension wird aus dem Microjetreaktor entweder mit hoch erhitzter Druckluft oder einem Inertgas oder ohne Verwendung eines Trägergases ausgetrieben. Dabei verdampfen die Flüssigkeiten, beispielsweise das Solvent und Nonsolvent, und am Ende des Verfahrens liegen die Nanopartikel als Pulver vor. Diese Vorgehensweise ist besonders dann geeignet, wenn die anorganischen Partikel oberflächenmodifiziert werden sollen, also beispielsweise mit oberflächenmodifizierenden Molekülen oder Polymeren beschichtet werden sollen.

Zur Beschichtung mit oberflächenmodifizierenden Molekülen oder Polymeren wird eines der Edukte gemeinsam mit einem oder mehreren oberflächenaktiven Molekül(en) oder Polymer(en) gelöst. Diese Lösung sowie das Nonsolvent oder der Reaktionspartner, das ein oder mehrere weitere Edukte enthalten kann, werden dann mit Hilfe von zwei Pumpen durch jeweils eigene Verrohrungen oder Kapillaren, beispielsweise aus rostfreiem Stahl, mit vorzugsweise konstanter Flussrate und konstantem Druck gepumpt und kollidieren im Mikrojetreaktor miteinander. Beide Flüssigkeitsströme werden darin sehr schnell vermischt, wobei das anorganische Produkt, beispielsweise das Bariumsulfat, als Nanopartikel ausfällt und die so entstehende Nanopartikel-Suspension aus dem Microjetreaktor ausgetrieben wird. Ein Verfahren zur Oberflächenbeschichtung mittels dieser Technologie ist beispielsweise in der DE 10 2009 008 478 A1 beschrieben. Durch die Oberflächenbeschichtung kann den anorganischen Partikeln nicht nur eine gewünschte Eigenschaft verliehen werden, es wird auch eine weitere Aggregation der Partikel und somit das Oswald-Wachstum der Partikel verhindert oder reduziert.

Die Partikel können jedoch auch ohne Oberflächenmodifikation im Herstellungsprozess stabilisiert werden, um eine Agglomeration oder gar Aggregation zu verhindern. Inerte Neutralpartikel, wie beispielsweise Bariumsulfat (BaSO₄), Calciumsulfat (CaSO₄) und Calciumcarbonat (CaCO₃), zeichnen sich grundsätzlich durch eine elektrische Oberflächenneutralität und der Abwesenheit von reaktiven Oberflächenzentren aus. Solche Partikeldispersionen können daher im Herstellungsprozess zur Agglomeration oder gar zur Aggregation neigen.

Die Agglomeration oder Aggregation kann verhindert oder zumindest reduziert werden, wenn eines der Edukte im Überschuss zu dem Kollisionspunkt zugeführt wird (wie beispielsweise in DE 10 2017 110 292 A1 beschrieben). Bei dem (verglichen zum stöchiometrischen Verhältnis im Endprodukt) im Überschuss zu dem Kollisionspunkt zugeführten Edukt kann es sich sowohl um das Kation als auch um das Anion handeln. Die resultierenden gefällten Partikel zeigen durch den Einbau dieses leichten Überschusses eine elektrostatisch aktive Partialladung und können somit sehr leicht und einfach stabilisiert werden. Der Überschuss kann bevorzugt das 1,01 bis 2,0-fache, bevorzugt das 1,05 bis 1,4-fache und besonders bevorzugt das 1,1 bis 1,3-fache der Menge des jeweiligen Edukts betragen, die dem stöchiometrischen Verhältnis des Endproduktes entspricht. Der Überschuss kann erreicht werden durch den Einsatz unterschiedlicher Düsendurchmesser im Mikrojetreaktor, eine unterschiedliche Konzentration des ersten Edukts zur Konzentration des zweiten Edukts, und/oder durch eine unterschiedliche Flussrate des ersten Edukts und des zweiten Edukts.

Das Verfahren zur Herstellung der partikulären Komponente (B) kann diskontinuierlich oder kontinuierlich betrieben werden.

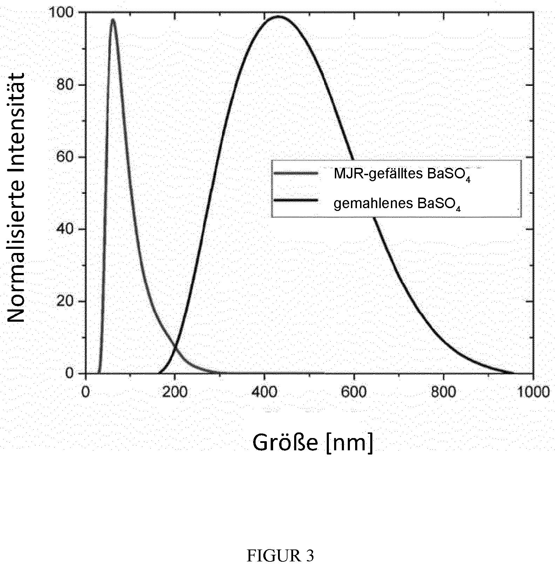

Ebenso erfindungsgemäß umfasst sind somit anorganische, partikuläre Komponenten, die wie vorstehend beschrieben oberflächenmodifiziert sind, die gemäß einem der vorstehend beschriebenen Verfahren herstellt worden sind. Sie sind vorzugsweise nanoskalar und zeichnen sich vorzugsweise, wie auch Figur 3 zeigt, durch eine enge Verteilung der Partikelgröße aus. Bezüglich der bevorzugten Partikelgröße wird auf die vorstehende Offenbarung Bezug genommen.

Die erfindungsgemäßen flüssigen oder pastösen Pigment- und/oder Füllstoffzubereitungen können durch ein Verfahren hergestellt werden, welche die folgenden Schritte umfasst.

Zunächst werden die einzelnen Komponenten der Pigment- und/oder Füllstoffzubereitung bereitgestellt. Das Pigment oder die Pigmentmischung und/oder der Füllstoff oder die Füllstoffmischung wird also Trockensubstanz oder in Form einer Vordispersion in einem geeigneten Dispersionsmedium bereitgestellt. Die Bereitstellung als Trockensubstanz ist bevorzugt.

Die vorstehend beschriebene partikuläre Komponente (B) wird ebenfalls entweder als trockenes Pulver oder als Partikeldispersion bereitgestellt. Die Partikel-dispersion kann, wie vorstehend beschrieben direkt über die Mikrojettechnologie erhalten werden. Liegt die partikuläre Komponente (B) als trockenes Pulver vor, wird diese in einem ersten Schritt in einem geeigneten Dispersionsmedium vordispergiert. Das Dispersionsmedium kann beispielsweise Wasser sein.

In einem nächsten Schritt wird dann das Pigment oder die verschiedenen Pigmente und/oder der Füllstoff oder die verschiedenen Füllstoffe (Komponente (A)) durch Dispergieren homogenisiert. Hierbei kann dem Pigment oder den verschiedenen Pigmenten und/oder dem Füllstoff oder den verschiedenen Füllstoffen (Komponente (A)) neben dem Wasser und/oder dem mindestens einen Lösungsmittel entweder die gesamte Menge oder zumindest eine Teilmenge der Partikeldispersion (B) sowie gegebenenfalls des oberflächenaktiven Netzmittels (C) zusetzt werden und die so erhaltene Suspension dann vorzugsweise einer Nasszerkleinerung unterworfen werden. Die Zugabe der restlichen Menge der Partikeldispersion (B) kann gegebenenfalls vor oder nach Durchführung der Nasszerkleinerung erfolgen. Die Nasszerkleinerung kann beispielsweise durch Mahlen der so erhaltenen Mischung in einer Rührwerkskugelmühle, erreicht werden. Vorteilhafterweise ist bei der Nasszerkleinerung bereits die gesamte Menge der partikulären Komponente (B) anwesend. Die gegebenenfalls noch fehlende Restmenge der Komponente (B) wird also vorzugsweise vor der Nasszerkleinerung zugesetzt.

Die so erhaltene Pigment- und/oder Füllstoffzubereitung kann zum Einfärbung organischer und anorganischer Materialien unter anderem zur Herstellung von Dispersionsfarben, Autolacken, Anstrichfarben durch Einrühren, Mahlen, und/oder Extrudieren verwendet werden. Ebenso können die erfindungsgemäßen Zubereitungen zum Einfärben von Kunststoffen verwendet werden. Die Zubereitungen können beispielsweise beim Extrusionsprozess zugesetzt werden.

Die erfindungsgemäßen Pigment- und/oder Füllstoffzubereitungen zeichnen sich durch zahlreiche Vorteile aus. Durch den Einsatz der nano- oder mikroskaligen partikulären Komponente (B) als Dispergiermittel kann der Anteil an Dispergiermittel reduziert werden. Ebenso kann der Anteil an Feuchthaltemittel reduziert werden. Dies spart nicht nur Kosten beim Herstellungsprozess, er verringert auch Probleme mit möglichen Inkompatibilitäten zwischen einzelnen Komponenten in Zwischen- oder Endprodukten.

Weiterhin wurde überraschenderweise festgestellt, dass durch die Verwendung der der nano- oder mikroskaligen partikulären Komponente (B) die Sedimentation von Pigment und/oder Füllstoff verringert werden kann. Es wurden beispielsweise Sedimentationsstabilitäten der erfindungsgemäßen Pigment- und/oder Füllstoffzubereitungen von mehr als 3 Monate bei 40 °C bestimmt. Außerdem konnte die Pigmentstabilisierung und die optische Performance verbessert werden, was in unmittelbarer Konsequenz einen geringeren Pigment- und/oder Füllstoffeinsatz erforderlich macht und damit wieder Herstellungskosten spart und Ressourcen schont. Auf den Einsatz weiterer Additive zur Pigmentstabilisierung kann verzichtet werden. Die Partikel der Komponente (B) bewirken eine elektrosterische oder zumindest elektrostatische oder sterische Stabilisierung der Pigment-und/oder Füllstoffpaste.

In einem weiteren Aspekt betrifft die vorliegende Erfindung daher auch Farben und Lacke, welche die vorstehend beschriebene Pigment- und/oder Füllstoffzubereitung enthalten.

Pigment- und/oder Füllstoffzubereitungen zum Einfärben und/oder Ausrüsten von Farben oder Lacken sind deshalb vorteilhaft, weil sie eine hohe Konzentration an Pigment und/oder Füllstoff in einer vordispergierten und standardisierten Form enthalten und damit eine einfache und exakte Einarbeitung des Pigments und/oder des Füllstoffs sicherstellen.

Die Pigment- und/oder Füllstoffzubereitung kann dabei wie die Farbe oder der Lack selbst formuliert sein und die entsprechenden Additive, Lösungsmittel und/oder Bindemittel enthalten. Bei den erfindungsgemäßen Pigment- und/oder Füllstoffzubereitungen ist aber besonders vorteilhaft hervorzuheben, dass sie bezüglich ihrer Bestandteile einfach formuliert werden können und auf im Stand der Technik noch notwendige Additive verzichtet werden kann. Damit sind die erfindungsgemäßen Pigment- und/oder Füllstoffzubereitungen mit einer Vielzahl an Farb- und Lacksystemen kompatibel.

Gemäß einer bevorzugten Ausführungsform der vorliegenden Erfindung ist die erfindungsgemäße flüssige oder pastöse Pigment- und/oder Füllstoffzubereitung im Lack oder in der Farbe mit einem Anteil im Bereich von 1-70 Gew.-%, bezogen auf die Gesamtzusammensetzung, enthalten. Noch mehr bevorzugt liegt der Anteil bei 1-50 Gew.- %, höchst bevorzugt bei 1-30 Gew.-%. Der Fachmann kann geeignete Anteile, je nach Einsatzgebiet und Pigment und/oder Füllstoff, ohne Probleme bestimmen. Grundsätzlich werden Pigmente und Füllstoffe im Farb-/Lackbereich sehr variabel eingesetzt. Bei Ruß liegt der Anteil im Lack häufig beispielsweise im Bereich weniger Prozent, während ein Füllstoff, wie Titandioxid, auch in der End-formulierung bis zu 30 % enthalten sein kann. Die erfindungsgemäßen Zubereitungen haben den Vorteil, dass sie auch hohe Pigment- und/oder Füllstoffkonzentrationen, in standardisierter und stabiler Form bereitstellen können. Bei erfindungsgemäßen Pigmentzubereitungen (Farbpasten) können die erfindungsgemäßen Pigment- und/oder Füllstoffzubereitungen vorzugsweise mit einem Anteil im Bereich von 1 bis 30 Gew.-%, bezogen auf die Gesamtzusammensetzung, eingesetzt werden. Bei erfindungsgemäße Füllstoffpasten können die erfindungsgemäßen Pigment- und/oder Füllstoffzubereitungen vorzugsweise mit einem Anteil im Bereich von 1 bis 70 Gew.-%, bezogen auf die Gesamtzusammensetzung, eingesetzt werden.

Gemäß einer Ausführungsform der vorliegenden Erfindung ist die Farbe, ausgewählt aus der Gruppe, bestehend aus Dispersionsfarben, Architektur-Dekofarben, Anstrichfarben und Druckfarben.

Gemäß einer weiteren Ausführungsform der vorliegenden Erfindung ist der Lack ein Autolack, insbesondere ein OEM Lack, oder ein Lack für eine Bandbeschichtung (Coil Coating), beispielsweise für eine kontinuierliche Metallbandbeschichtung.

Die so erhaltenen bandbeschichteten Metalle, beispielsweise beschichtete Stahl- oder Aluminium-Bleche gehören ebenfalls zum Schutzumfang der vorliegenden Erfindung. Die so beschichteten Bleche können beispielsweise im Dach- und Fassadenbau eingesetzt werden, aber auch bei der Herstellung von Elektro- und Haushaltsgeräte, wie Waschmaschinen, Mikrowellengeräte und Kühlschränken, Gehäuse von Schaltschränken, EDV-Geräten und Leuchten, Lamellen für Jalousien, Blechtüren und Tore, etc.. Das Bandbeschichten ersetzt eine nachträgliche Pulverbeschichtung.

Die Herstellung der Farben und Lacke erfolgt nach den üblichen, dem Fachmann wohlbekannten Verfahren.

In einem weiteren Aspekt betrifft die vorliegende Erfindung die Verwendung einer anorganisch oder organisch oberflächenmodifizierten, anorganischen partikulären Komponente (B) zur Stabilisierung einer flüssigen oder pastösen Pigment- und/oder Füllstoffzubereitung durch Vermeidung oder Verminderung der Agglomeration der Pigment- und/oder Füllstoffpartikel. Die Komponente (B) weist durch die Oberflächenmodifizierung eine kationische, anionische, amphotere oder nicht-ionische Oberfläche auf. Außerdem weist die Komponente (B) in der flüssigen oder pastösen Pigment- und/oder Füllstoffzubereitung oder beim Herstellen der flüssigen oder pastösen Pigment- und/oder Füllstoffzubereitung ein Zetapotenzial auf, das der Ladung der Pigment- und/oder Füllstoffpartikel entgegengesetzt ist, wobei die Partikel der dispergierten Komponente (B) eine Teilchengrößenverteilung mit einem d50-Wert, gemessen gemäß ISO 22412:2008, im Bereich von 20 bis 300 nm aufweisen. Bezüglich bevorzugter Ausführungsformen der Pigment- und/oder Füllstoffpartikel wird auf die vorstehende Offenbarung zur Komponente (A) verwiesen. Gleiches gilt für die Komponente (B), sowohl hinsichtlich deren anorganischen Kerns als auch hinsichtlich des Oberflächenmodifikators.

Bei der erfindungsgemäßen Verwendung ist es bevorzugt, dass für den Fall, dass die Pigment- und/oder Füllstoffpartikel eine positive Oberflächenladung aufweisen, das Zetapotenzial der Komponente (B) im Bereich von -70 mV bis -2 mV, noch mehr bevorzugt im Bereich von -60 mV bis -3 mV, liegt. Für den Fall, dass die Pigment- und/oder Füllstoffpartikel eine negative Oberflächenladung aufweisen, ist es bevorzugt, dass das Zetapotenzial der Komponente (B) im Bereich von +0,5 mV bis +40 mV, noch mehr bevorzugt im Bereich von +1 mV bis +35 mV liegt.

### KURZE BESCHREIBUNG DER FIGUREN

- Figur 1:: Figur 1 zeigt die Prinzipien einer elektrostatischen (Fig. 1A), einer sterischen (Fig. 1B) und elektrosterischen (Fig. 1C) Stabilisierung.

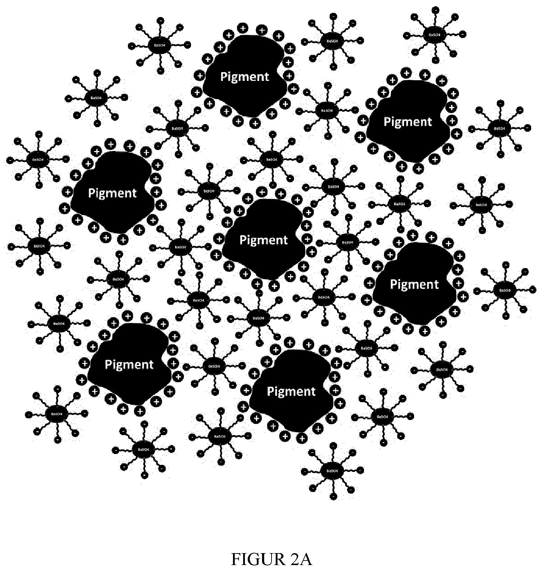

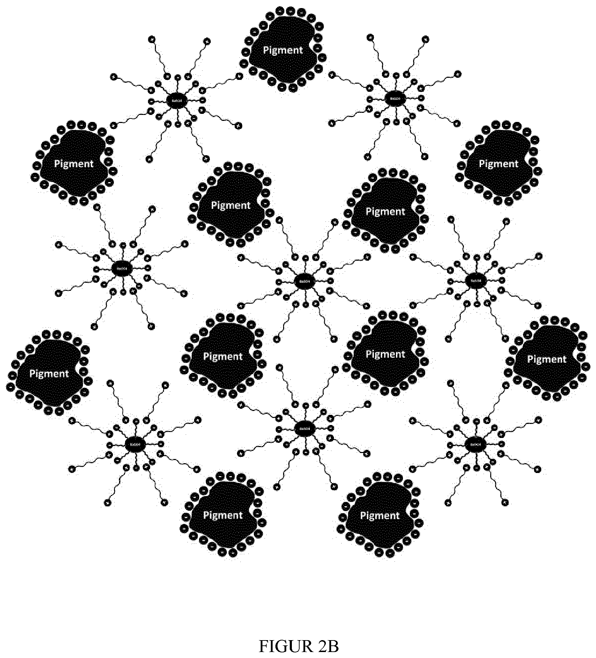

- Figur 2:: Figur 2 zeigt eine Struktur aus Komponente (B), hier Bariumsulfat, und einer Pigmentkomponente (A). In Figur 2A für ein Pigment mit positiver Oberflächenladung, in Figur 2B für ein Pigment mit negativer Oberflächenladung.
- Figur 3:: Figur 3 vergleicht die normalisierte Größenverteilung von Bariumsulfatdispersionen. Eine gemäß der erfindungsgemäß angewandten MJR-Technologie hergestellte Dispersion (linke Kurve) zeichnet sich durch eine geringere Partikelgröße und eine engere Größenverteilung aus. Herkömmlich gemahlenes und dispergiertes Bariumsulfat (rechte Kurve) besteht aus größeren Teilchen und zeichnet sich durch eine breitere Größenverteilung aus.
- Figur 4:: Figur 4 zeigt die Kombination eines negativ geladenen Partikels (hier Bariumsulfat) mit einem amphiphilen Netzmittel zur Pigmentstabilisierung.

### BEISPIELE

### Beispiel 1: Herstellen einer oberflächenmodifizierten Bariumsulfatdispersion

Ein Verfahren zum Herstellen einer niedrigviskosen wässerigen, oberflächenmodifizierten Bariumsulfatdispersion für eine erfindungsgemäße Pigment- und/oder Füllstoffzubereitung bei Raumtemperatur weist die folgenden Schritte auf:
a) Bereitstellen einer Bariumsalzlösung (Halogenid, Nitrat oder Carboxylat).
b) Bereitstellen einer Alkalisulfatlösung.
c) Bereitstellen wenigstens eines Kammpolymers mit einer spezifischen Ladung von -10 C/g bis -500 C/g bei pH 8.
d) Mischen der Bariumsalzlösung aus Schritt a) mit dem Kammpolymer aus Schritt c) in einer Menge von vorzugsweise 0,5 bis 20 %, vorzugsweise von 1 bis 10 % und höchst vorzugsweise von 3 bis 8 % relativ zu dem festen Produkt.
e) Fällen von Bariumsulfat durch Mischen von Flüssigkeitsströmen der Schritte b) und d) im Durchfluss durch einen Mikroreaktor, vorzugsweise einen vorzugsweise Mikrojetreaktor, wobei das Produkt durch einen Trägergasstrom ausgetragen wird.

Im Durchfluss/Kollisionspunkt des Mikroreaktors, in dem das Produkt durch einen Trägergasstrom (Stickstofffluss: 1.000 cm³/min) ausgetragen wird, reagieren die Alkalisulfatlösung (beispielsweise Natriumsulfatlösung) und die Bariumsalzlösung (beispielsweise Bariumchloridlösung) in Form von gerührten wässerigen Lösungen in einem Molverhältnis von 1,0 : 1,05 miteinander. Die Bariumchloridlösung hat eine Dichte von 1,043 g/ml und enthält 3 % eines Polycarboxylatether, beispielsweise Melpers 2454, bezogen auf die theoretische Ausbeute an Bariumsulfat. Die erhaltene weiße Dispersion kann durch Ultrafiltration gereinigt werden, bis eine elektrische Leitfähigkeit von 1.000 µS/cm erreicht wird und ist eine niedrigviskose wässrige Bariumsulfatdispersion, die durch Ultrafiltration auf bis zu 50 % aufkonzentriert werden kann.

### Beispiel 2: Herstellen einer erfindungsgemäßen Pigmentzubereitung

Im Mahlgut werden bis auf das Pigment (Printex U) alle Komponenten der Zubereitung vorgelegt (Tabelle 1). Danach wird das Pigment über einen Zeitraum von 5 min über ein Rotor-Stator System (Miccra D-13, 14000 rpm) dem Mahlgut zugegeben und eindispergiert. Nachhomogenisierung für weitere 5 min bei 14000 Umdrehungen pro Minute (rpm) liefert eine fließfähige Pigmentformulierung (Auslaufbecher 32s, Düse 3mm, DIN EN ISO 2431). Die resultierende Dispersion besitzt ein negatives Zetapotenzial (-25mV) und einen d50-Wert von 1,1 µm (d10=0,63µm, d90=1,67µm).

Die Zubereitung ist wie folgt zusammengesetzt:
13,20 Masse-% nanoskaliges BaSO₄ gemäß Beispiel 1 oder Beispiel 2 (100 nm)
59,85 Masse-% Wasser
0,20 Masse-% Ebotec MT15SF
0,30 Masse-% Dimethylethanolamin 50%
4,75 Masse-% Zetasperse^{®} 3700
21,30 Masse-% Printex U
0,40 Masse-% Surfynol 104 E

Die Dispergierhilfen können gleichzeitig mit dem Pigment bzw. Füllstoff in das Dispergiermedium eingetragen werden bzw. vorab mit diesem vermischt werden. Der kombinierte Einsatz der partikulären Komponente (B), beispielsweise des nanoskaligen Bariumsulfats mit weiteren bereits bekannten Dispergierhilfen wird im Rahmen dieser Anmeldung natürlich eingeschlossen.

Durch die vorteilhaften Eigenschaften des nanokaligen Bariumsulfats kann der notwendige Anteil an Dispergierhilfen deutlich reduziert werden oder es kann auf diese ganz verzichtet werden.

### Beispiel 3: Zetapotenziale

Die Zetapotenziale einer Dispersion von partikulärem, oberflächenbeschichteten Bariumsulfat wurde im wäßrigen Medium in Anwesenheit verschiedener Oberflächenmodifikatoren bestimmt. Die Bariumsulfatpartikel waren mit 1 % Oberflächenmodifikator beschichtet und die Zetapotenziale wurden gemäß ISO 13099-2:2012 über elektrophoretische Lichtstreuung bestimmt.

Die Messung des Zetapotenzials erfolgte erfindungsgemäß mittels eines Zetasizer Nano ZS90 der Fa. Malvern Instruments Ltd., Herrenberg. Durch Anlegen eines elektrischen Wechselfeldes und der resultierenden Bewegung geladener Teilchen in Dispersion erfolgt durch interferometrische Lasertechnik eine Messung der Bewegungsgeschwindigkeit der Teilchen im elektrischen Feld. Diese ermöglicht wiederum die Berechnung der elektrophoretischen Mobilität und daraus des Zetapotenzials durch die implementierte Software Zetasizer Ver. 7.11. Zur Messung wurden Standard Zetaküvetten verwendet. Die Messung erfolgte in allen Fällen temperaturkontrolliert bei 25°C.

Probenvorbereitung: Zur Messung des Zetapotenzials wurden 0.82 g einer 24,31 Gew.-% wässrigen Bariumsulfatdispersion mit einem Leitwert < 1mS zu 40 g einer 1 Gew% Additivlösung (bezogen auf Aktivgehalt) zugegeben und für 30s gemischt.

1 ml der Probe werden luftblasenfrei in eine Standard Zetaküvette gegeben, in das Messgerät überführt und nach Erreichen des thermischen Gleichgewichts zügig gemessen.

Die Ergebnisse sind in Tabelle 1 zusammengefasst:

| Oberflächenmodifikator | Zetapotenzial der BaSO₄-Dispersion [mV] |
|---|---|
| Efka FA 4671 | -59,9 |
| Disperbyk 2010 | -37,3 |
| Dispers 757W | -20,4 |
| Metolat 514 | -18,7 |
| Zetasperse 3600 | -17,9 |
| Dispex Ultra PX 4525 | -13,9 |
| Edaplan 494 | -12,6 |
| Disperbyk 2060 | -12,0 |
| Zetasperse 3700 | -11,9 |
| Dispex Ultra PX 4275 | -11,8 |
| Disperbyk 180 | -10,8 |
| Dispex CX 4320 | -10,6 |
| Edaplan 490 | -10,5 |
| Edaplan 516 | -7,61 |
| Tego Dispers 755W | -4,57 |
| Disperbyk 191 | -3,3 |
| Dispex Ultra FA 4420 | -3 |
| Tego Dispers 760W | -2,56 |
| Disperbyk 184 | 1,05 |
| Byk LP N 22669 | 2,58 |
| Efka WE 3110 | 3,96 |
| Carbowet GA 211 | 4,4 |
| Carbowet 221 | 4,72 |
| Dispex Ultra FA 4480 | 5,77 |
| Disperbyk 192 | 6,37 |
| Dispersogen PCE | 8,05 |
| Disperbyk 182 | 10,1 |
| Dispex Ultra PX 4575 | 14,9 |
| Dispex Ultra FA 4425 | 17,4 |

## Patentansprüche

1. Flüssige oder pastöse Pigment- und/oder Füllstoffzubereitung, umfassend
- 1 bis 70 Gew.-% mindestens eines in der Zubereitung dispergierten Pigments und/oder mindestens eines in der Zubereitung dispergierten Füllstoffs, Komponente A,
- 1 bis 25 Gew.-% mindestens einer in der Zubereitung dispergierten anorganischen, partikulären Komponente, als Komponente B,
- 0 bis 10 Gew.-% mindestens eines oberflächenaktiven Netzmittels, das vorzugsweise ebenfalls dispergierende Eigenschaften aufweist, und
- als Rest Wasser und/oder mindestens ein Lösungsmittel,
wobei die Partikel der Komponente B anorganisch oder organisch oberflächenmodifiziert sind, wobei der verwendete Oberflächenmodifikator so ausgewählt ist, dass die Komponente B eine kationische, anionische, amphotere oder nicht-ionische Oberfläche aufweist, und die Komponente B ferner ein Zetapotenzial, gemessen gemäß ISO 13099-2:2012 über elektrophoretische Lichtstreuung, aufweist, das der Ladung der Partikel der Komponente A entgegengesetzt ist oder im Fall von ungeladenen Partikeln der Komponente A ein Zetapotenzial im Bereich von -60 bis +40 mV aufweist, um so eine Adhäsion der Partikel B auf der Pigment- und/oder Füllstoffoberfläche zu bewirken,
wobei die Partikel der dispergierten Komponente B eine Teilchengrößenverteilung mit einem d50-Wert, gemessen gemäß ISO 22412:2008, im Bereich von 20 bis 300 nm aufweisen.

2. Pigment- und/oder Füllstoffzubereitung nach Anspruch 1, wobei der anorganische Kern der Partikel der Komponente B ausgewählt ist aus der Gruppe, bestehend aus Bariumsulfat, Calciumcarbonat, Titandioxid, Siliziumdioxid und beliebigen Mischungen davon, vorzugsweise umfasst der Kern der Partikel der Komponente B Bariumsulfat oder der Kern ist ein Bariumsulfatpartikel.

3. Pigment- und/oder Füllstoffzubereitung Anspruch 1 oder Anspruch 2, wobei die Partikel der dispergierten Komponente B eine Teilchengrößenverteilung mit einem d50-Wert im Bereich von 25 bis 200 nm aufweisen.

4. Pigment- und/oder Füllstoffzubereitung nach einem der vorhergehenden Ansprüche, wobei die Partikel der Komponente B mit mindestens einer organischen Verbindung oberflächenmodifiziert sind, wobei die organische Verbindung vorzugsweise ausgewählt ist aus der Gruppe der anionischen, kationischen, nicht-ionischen, amphoteren oder multifunktionellen Moleküle oder Polymere, insbesondere aus der Gruppe der Kammpolymer-basierten Oberflächenmodifikatoren, noch mehr bevorzugt von Kammpolymeren mit einem Polyacrylat-Hauptkette und PEG-Seitenketten, die vorzugsweise von zahlenmittleres Molekulargewicht Mn im Bereich von 500 bis 6.000 g/mol ausweisen, bestimmt durch Gelpermeationschromatographie.

5. Pigment- und/oder Füllstoffzubereitung nach einem der vorhergehenden Ansprüche, wobei der Massenanteil des Oberflächenmodifikators, bezogen auf den anorganischen Kern der Komponente B, insbesondere Bariumsulfat, 0,1 bis 50 %, vorzugsweise 0,2 bis 10 % beträgt.

6. Pigment- und/oder Füllstoffzusammensetzung nach einem der vorhergehenden Ansprüche, wobei für den Fall, dass die Komponente A eine positive Oberflächenladung aufweist, das Zetapotenzial der Komponente B im Bereich von - 60 mV bis -3 mV liegt, und wobei für den Fall, dass die Komponente A eine negative Oberflächenladung aufweist, das Zetapotenzial der Komponente B im Bereich von +1 mV bis +40 mV liegt.

7. Pigment- und/oder Füllstoffzubereitung nach einem der vorhergehenden Ansprüche 1 bis 5, wobei bei Verwendung eines unpolaren Pigment- oder Füllstoffkörpers ein zusätzliches Netzmittel verwendet wird, wobei das Netzmittel vorzugsweise ein amphiphiles molekulares oder polymeres Netzmittel und/oder vorzugsweise ein anionisches oder kationisches Netzmittel mit pigmentbenetzenden Eigenschaften ist.

8. Verfahren zum Herstellen einer Pigment- und/oder Füllstoffzubereitung nach einem der Ansprüche 1 bis 7, wobei das Verfahren die folgenden Schritte umfasst:
a. Vorlegen einer Dispersion der oberflächenmodifizierten Partikel, Komponente B im Mahlgut,
b. Homogenisieren des Pigments und/oder Füllstoffs, Komponente A, durch Dispergieren.

9. Farbe oder Lack, umfassend die flüssige oder pastöse Pigment- oder Füllstoffzubereitung nach einem der Ansprüche 1 bis 7.

10. Farbe oder Lack nach Anspruch 9, wobei die flüssige oder pastöse Pigment- oder Füllstoffzubereitung mit einem Anteil im Bereich von 1-30 Gew.-%, bezogen auf die Gesamtzusammensetzung bei Pigmentzubereitungen, oder 1-70 Gew.-%, bezogen auf die Gesamtzusammensetzung bei Füllstoffzubereitungen, enthalten ist.

11. Farbe nach Anspruch 9 oder Anspruch 10, ausgewählt aus der Gruppe, bestehend aus Dispersionsfarben, Architektur-Dekofarben, Anstrichfarben und Druckfarben.

12. Lack nach Anspruch 9 oder Anspruch 10, wobei der Lack ein Autolack oder ein Lack für eine Bandbeschichtung ist.

13. Verwendung einer anorganisch oder organisch oberflächenmodifizierten, anorganischen partikulären Komponente B zur Stabilisierung einer flüssigen oder pastösen Pigment- und/oder Füllstoffzubereitung nach einem der Ansprüche 1-7 durch Vermeidung oder Verminderung der Agglomeration der Pigment- und/oder Füllstoffpartikel, wobei die Komponente B eine kationische, anionische, amphotere oder nicht-ionische Oberfläche aufweist, und die Komponente B in der Pigment- und/oder Füllstoffzubereitung ferner ein Zetapotenzial aufweist, das der Ladung der Partikel der Komponente A entgegengesetzt ist, wobei die Partikel der dispergierten Komponente B eine Teilchengrößenverteilung mit einem d50-Wert, gemessen gemäß ISO 22412:2008, im Bereich von 20 bis 300 nm aufweisen.

14. Verwendung nach Anspruch 13, wobei für den Fall, dass die Pigment- und/oder Füllstoffpartikel eine positive Oberflächenladung aufweisen, das Zetapotenzial der Komponente B im Bereich von -60 mV bis -3 mV liegt, und wobei für den Fall, dass die Pigment- und/oder Füllstoffpartikel eine negative Oberflächenladung aufweisen, das Zetapotenzial der Komponente B im Bereich von +1 mV bis +10 mV liegt.

## Claims

1. A liquid or pasty pigment and/or filler preparation comprising
- 1 to 70 % by weight of at least one pigment dispersed in the preparation and/or at least one filler dispersed in the preparation, as component A,
- 1 to 25 % by weight of at least one inorganic particulate component dispersed in the preparation, as component B,
- 0 to 10 % by weight of at least one surface-active wetting agent, preferably also having dispersing properties, and
- water and/or at least one solvent,
wherein the particles of component B are inorganically or organically surface-modified, the surface modifier used being selected such that component B has a cationic, anionic, amphoteric or non-ionic surface, and component B further has a zeta potential measured according to ISO 13099-2:2012 by dynamic light scattering opposite to the charge of the particles of component A or, in the case of uncharged particles of component A, has a zeta potential in the range of -60 to +40 mV so as to cause adhesion of the particles B to the pigment and/or filler surface,
wherein the particles of the dispersed component B have a particle size distribution with a d50 value in the range of 20 to 300 nm, measured according to ISO 22412:2008.

2. The pigment and/or filler preparation according to claim 1, wherein the inorganic core of the particles of component B is selected from the group consisting of barium sulphate, calcium sulphate, titanium oxide, silica and mixtures thereof, preferably the core of the particles of component B comprises barium sulphate or the core is the barium sulphate particle.

3. The pigment and/or filler preparation according to claim 1 or claim 2, wherein the particles of the dispersed component B have a particle size distribution with a d50 value in the range of 25 to 200 nm.

4. A pigment and/or filler composition according to any one of the preceding claims, wherein the particles of component B are surface-modified with at least one organic compound, wherein the organic compound is preferably selected from the group consisting of anionic, cationic, non-ionic, amphoteric, or multifunctional molecules or polymers, in particular from the group consisting of comb polymer -based surface modifiers, and even more preferably from comb polymers having a polyacrylate main chain and PEG side chains, which preferably have a number-average molecular weight Mn in the range of 500 to 6,000 g/mol, determined by gel permeation chromatography.

5. The pigment and/or filler preparation according to any one of the preceding claims, wherein the mass fraction of the surface modifier, based on the inorganic core of component B, in particular barium sulphate, is 0.1 to 50 %, and preferably is 0.2 to 10 % .

6. The pigment and/or filler preparation according to any one of the preceding claims, wherein, if the component A has a positive surface charge, the zeta potential of the component B is in the range of -60 mV to -3 mV, and if the component A has a negative surface charge, the zeta potential of the component B is in the range of +1 mV to +40 mV.

7. The pigment and/or filler preparation according to any one of the preceding claims 1 to 5, wherein when a non-polar pigment or filler is used, an additional wetting agent is used, the wetting agent being an amphiphilic molecular or polymeric wetting agent and/or being an anionic or cationic wetting agent with pigment-wetting properties.

8. A process for preparing a pigment and/or filler preparation according to any one of claims 1 to 7, which process comprises the following steps:
a. presenting a dispersion of the surface-modified particles component B in the mill base,
b. homogenizing the pigment and/or filler, component A, by dispersing.

9. A paint or varnish comprising the liquid or pasty pigment or filler preparation according to any one of claims 1 to 7.

10. A paint or varnish according to claim 9, wherein the liquid or paste-like pigment or filler preparation is present in an amount ranging from 1 to 30 wt.% based on the total composition for pigment preparations, or from 1 to 70 wt.% based on the total composition for filler preparations.

11. A paint according to claim 9 or claim 10, selected from the group consisting of emulsion paints, architectural decorative paints, coating paints, and printing inks.

12. A varnish according to claim 9 or claim 10, wherein the varnish is an automotive varnish or a varnish for coil coating.

13. Use of an inorganic particulate component B, surface-modified with an inorganic or organic compound, for stabilizing a liquid or paste-like pigment and/or filler preparation according to any one of claims 1-7 by preventing or reducing agglomeration of the pigment and/or filler particles, wherein component B has a cationic, anionic, amphoteric, or non-ionic surface, and component B in the pigment and/or filler preparation further exhibits a zeta potential opposite to the charge of the particles of component A, wherein the particles of the dispersed component B have a particle size distribution with a d50 value, measured in accordance with ISO 22412: 2008, in the range of 20 to 300 nm.

14. Use according to claim 13, wherein, in the event that the pigment and/or filler particles have a positive surface charge, the zeta potential of component B lies in the range of -60 mV to -3 mV, and wherein, if the pigment and/or filler particles have a negative surface charge, the zeta potential of component B is in the range of +1 mV to +10 mV.

## Revendications

1. Préparation de liquide ou de pigment pâteux et/ou de charge comprenant
- 1 à 70 % en poids d'au moins un pigment dispersé dans la préparation et/ou au moins une charge dispersée dans la préparation, comme composant A,
- 1 à 25 % en poids d'au moins un composant de particule inorganique dispersé dans la préparation, comme composant B,
- 0 à 10 % en poids d'au moins un agent de mouillage tensioactif, de préférence ayant aussi des propriétés de dispersion, et
- le reste étant constitué d'eau et/ou au moins un solvant,
les particules du composant B étant inorganiquement ou organiquement modifiées en surface, le modificateur de surface utilisé étant choisi de telle manière que le composant B a une surface cationique, anionique, amphotère ou non ionique et le composant B a en outre un potentiel zéta, déterminée selon la norme ISO 13099-2 :2012, opposé à la charge des particules du composant A ou dans le cas de particules non chargées du composant A, a un potentiel zéta dans la plage de -60 à +40 mV de manière à entraîner l'adhésion des particules B à la surface du pigment et/ou de la charge,
les particules du composant B dispersé ayant une distribution de taille de particule avec une valeur d50 dans la plage de 20 à 300 nm, déterminée selon la norme ISO 22412 : 2008.

2. Préparation de pigment et/ou de charge selon 1a revendication 1, dans laquelle le noyau inorganique des particules du composant B est choisi parmi le groupe constitué du sulfate de baryum, du carbonate de calcium, du dioxyde de titane, du dioxyde de silicium et de tout mélange de ceux-ci ; de préférence, le noyau des particules du composant B comprend du sulfate de baryum ou le noyau est une particule de sulfate de baryum.

3. Préparation de pigment et/ou de charge selon la revendication 1 ou la revendication 2, dans laquelle les particules du composant B dispersées ont une distribution de taille de particule avec une valeur d50 dans la plage de 25 à 200 nm.

4. Préparation de pigment et/ou de charge selon l'une quelconque des revendications précédentes, dans laquelle les particules du composant B sont modifiées en surface avec au moins un composé organique, ce composé organique étant de préférence choisi parmi le groupe des molécules ou polymères anioniques, cationiques, non ioniques, amphotères ou multifonctionnels, en particulier parmi le groupe des modificateurs de surface à base de polymères en peigne , et de préférence encore parmi les polymères en peigne présentant une chaîne principale de polyacrylate et des chaînes latérales de PEG, qui présentent de préférence un poids moléculaire moyen en nombre Mn compris entre 500 et 6 000 g/mol, déterminé par chromatographie par perméation de gel.

5. Préparation de pigment et/ou de charge selon l'une quelconque des revendications précédentes, dans laquelle la fraction de masse du modificateur de surface, sur la base du noyau inorganique du composant B, en particulier le sulfate de baryum, est de 0,1 à 50 % et de préférence de 0,2 à 10 %.

6. Préparation de pigment et/ou de charge selon l'une quelconque des revendications précédentes, dans laquelle, si le composant A a une charge de surface positive, le potentiel zêta du composant B se situe dans la plage de - 60 mV à -3 mV, et si le composant A a une charge de surface négative, le potentiel zêta du composant B se situe dans la plage de +1 mV à +40 mV.

7. Préparation de pigment et/ou de charge selon l'une quelconque des revendications 1 à 5 précédentes, dans laquelle, en cas d'utilisation d'un corps de pigment ou de charge non polaire, on utilise un agent mouillant supplémentaire, cet agent mouillant étant de préférence un agent mouillant moléculaire ou polymère amphiphile et/ou, de préférence, un agent mouillant anionique ou cationique présentant des propriétés de mouillage des pigments.

8. Procédé de préparation d'une préparation de pigment et/ou de charge selon de charges selon l'une des revendications 1 à 7, lequel procédé comprend les étapes suivantes consistant à :
a. présenter une dispersion des particules modifiées en surface composant B dans la base de broyage,
b. homogénéiser le pigment et/ou la charge composant A par dispersion.

9. Peinture ou vernis comprenant la préparation de liquide ou de pigment pâteux ou de charge selon l'une quelconque des revendications 1 à 7.

10. Peinture ou vernis selon la revendication 9, dans lequel la préparation liquide ou pâteuse de pigment ou de charge est présente en une proportion comprise entre 1 et 30 % en poids, par rapport à la composition totale dans le cas des préparations de pigments, ou entre 1 et 70 % en poids, par rapport à la composition totale dans le cas des préparations de charges.

11. Peinture selon la revendication 9 ou la revendication 10, choisie parmi le groupe constitué des peintures en dispersion, des peintures décoratives pour l'architecture, des peintures de finition et des encres d'imprimerie.

12. Vernis selon la revendication 9 ou la revendication 10, le vernis étant un vernis automobile ou un vernis destiné au revêtement en continu.

13. Utilisation d'un composant B particulaire inorganique, à surface modifiée de manière inorganique ou organique, pour stabiliser une préparation liquide ou pâteuse de pigments et/ou de charges selon l'une des revendications 1 à 7, en empêchant ou en réduisant l'agglomération des particules de pigments et/ou de charges, le composant B présentant une surface cationique, anionique, amphotère ou non ionique, et le composant B dans la préparation de pigments et/ou de charges présente en outre un potentiel zêta opposé à la charge des particules du composant A, les particules du composant B dispersé présentant une distribution granulométrique avec une valeur d50, mesurée selon la norme ISO 22412 :2008, comprise entre 20 et 300 nm.

14. Utilisation selon la revendication 13, dans laquelle, dans le cas où les particules de pigment et/ou de charge présentent une charge superficielle positive, le potentiel zêta du composant B est compris entre -60 mV et -3 mV, et dans laquelle, dans le cas où les particules de pigment et/ou de charge présentent une charge superficielle négative, le potentiel zêta du composant B se situe dans la plage de +1 mV à +10 mV.
